(19) **Europäisches Patentamt / European Patent Office / Office européen des brevets**

(11) **EP 3 143 704 B1**

(12) **EUROPEAN PATENT SPECIFICATION**

(45) Date of publication and mention of the grant of the patent:
**19.06.2019 Bulletin 2019/25**

(21) Application number: **15792361.6**

(22) Date of filing: **13.02.2015**

(51) Int Cl.:
*H04B 7/04* (2017.01)

(86) International application number:
**PCT/KR2015/001471**

(87) International publication number:
**WO 2015/174616 (19.11.2015 Gazette 2015/46)**

(54) **METHOD AND APPARATUS FOR CALCULATING FEEDBACK INFORMATION FOR 3D MIMO IN WIRELESS COMMUNICATION SYSTEM**

VERFAHREN UND VORRICHTUNG ZUR KALKULATION VON FEEDBACKINFORMATIONEN FÜR 3D-MIMO IN EINEM DRAHTLOSKOMMUNIKATIONSSYSTEM

PROCÉDÉ ET APPAREIL PERMETTANT DE CALCULER DES INFORMATIONS DE RÉTROACTION DE MIMO 3D DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.05.2014 US 201461993283 P**

(43) Date of publication of application:
**22.03.2017 Bulletin 2017/12**

(73) Proprietor: **LG Electronics Inc.**
**Yeongdeungpo-gu**
**Seoul 07336 (KR)**

(72) Inventors:
• **KANG, Jiwon**
  **Seoul 137-893 (KR)**
• **KIM, Sunam**
  **Seoul 137-893 (KR)**
• **KIM, Kitae**
  **Seoul 137-893 (KR)**
• **LEE, Kilbom**
  **Seoul 137-893 (KR)**
• **KIM, Heejin**
  **Seoul 137-893 (KR)**

(74) Representative: **Cabinet Plasseraud**
**66, rue de la Chaussée d'Antin**
**75440 Paris Cedex 09 (FR)**

(56) References cited:
EP-A2- 2 645 616          EP-A2- 2 645 616
WO-A1-2013/152490     WO-A1-2014/046499
WO-A1-2014/052806     WO-A1-2014/069821
US-A1- 2013 329 664

## Description

[Technical Field]

The present invention relates to a wireless communication system, and more particularly, to a method and apparatus for calculating feedback information for three-dimensional (3D) multiple input multiple output (MIMO) in a wireless communication system.

[Background Art]

As an example of a mobile communication system to which the present invention is applicable, a 3rd generation partnership project long term evolution (hereinafter, referred to as LTE) communication system is described in brief.

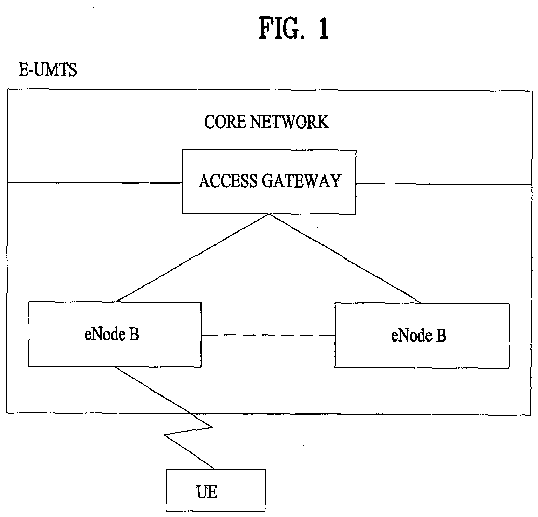

FIG. 1 is a diagram schematically illustrating a network structure of an E-UMTS as an exemplary radio communication system. An evolved universal mobile telecommunications system (E-UMTS) is an advanced version of a legacy universal mobile telecommunications system (UMTS) and basic standardization thereof is currently underway in 3GPP. E-UMTS may be generally referred to as an LTE system. For details of the technical specifications of UMTS and E-UMTS, reference can be made to Release 7 and Release 8 of "3rd Generation Partnership Project; Technical Specification Group Radio Access Network".

Referring to FIG. 1, the E-UMTS includes a user equipment (UE), evolved Node Bs (eNode Bs or eNBs), and an access gateway (AG) which is located at an end of an evolved UMTS terrestrial radio access network (E-UTRAN) and connected to an external network. The eNBs may simultaneously transmit multiple data streams for a broadcast service, a multicast service, and/or a unicast service.

One or more cells are present per eNB. A cell is configured to use one of bandwidths of 1.25, 2.5, 5, 10, 15, and 20MHz to provide a downlink or uplink transmission service to multiple UEs. Different cells may be configured to provide different bandwidths. The eNB controls data transmission and reception to and from a plurality of UEs. Regarding downlink (DL) data, the eNB transmits DL scheduling information to notify a corresponding UE of a time/frequency domain within which data is to be transmitted, coding, data size, and hybrid automatic repeat and request (HARQ)-related information by transmitting DL scheduling information to the UE. In addition, regarding uplink (UL) data, the eNB transmits UL scheduling information to a corresponding UE to inform the UE of an available time/frequency domain, coding, data size, and HARQ-related information. An interface for transmitting user traffic or control traffic between eNBs may be used. A core network (CN) may include the AG and a network node for user registration of the UE. The AG manages mobility of a UE on a tracking area (TA) basis, each TA including a plurality of cells.

Although radio communication technology has been developed up to LTE based on wideband code division multiple access (WCDMA), demands and expectations of users and providers continue to increase. In addition, since other radio access technologies continue to be developed, new advances in technology are required to secure future competitiveness. For example, decrease of cost per bit, increase of service availability, flexible use of a frequency band, a simplified structure, an open interface, appropriate power consumption of a UE, etc. are required.

US 2013/0329664 A1 discloses a method for transmitting/receiving channel state information for use in multi-antenna system.

EP 2 645 616 A2 discloses a base station and a mobile station using MIMO communication.

[Disclosure]

[Technical Problem]

An object of the present invention devised to solve the problem lies in a method and apparatus for calculating feedback information for three-dimensional (3D) multiple input multiple output (MIMO) in a wireless communication system.

[Technical Solution]

The object of the present invention can be achieved by providing a method for generating channel state information for MIMO-based beamforming in a wireless communication system, and a related UE, as defined in the appended claims.

[Advantageous Effects]

According to embodiments of the present invention, it is possible to efficiently calculate feedback information for three-dimensional (3D) multiple input multiple output (MIMO) in a wireless communication system.

It will be appreciated by persons skilled in the art that that the effects that can be achieved through the present invention are not limited to what has been particularly described hereinabove and other advantages of the present invention will be more clearly understood from the following detailed description.

[Description of Drawings]

FIG. 1 is a diagram schematically illustrating a network structure of an E-UMTS as an exemplary radio communication system.

FIG. 2 is a diagram illustrating structures of a control plane and a user plane of a radio interface protocol between a UE and an E-UTRAN based on the 3GPP radio access network specification.

FIG. 3 is a diagram illustrating physical channels used in a 3GPP system and a general signal transmission method using the same.

FIG. 4 is a diagram illustrating the structure of a radio frame used in an LTE system.

FIG. 5 is a diagram illustrating the structure of a DL radio frame used in an LTE system.

FIG. 6 is a diagram illustrating the structure of a UL subframe in an LTE system.

FIG. 7 is a diagram illustrating a configuration of a general MIMO communication system.

FIGs. 8 and 9 are diagrams illustrating DL RS configurations in an LTE system supporting DL transmission through four antennas.

FIG. 10 illustrates exemplary DL DM-RS allocation defined in a current 3GPP standard specification.

FIG. 11 illustrates CSI-RS configuration #0 of DL CSI-RS configurations defined in the current 3GPP standard.

FIG. 12 is a diagram illustrating an antenna tilting scheme.

FIG. 13 is a diagram comparing a conventional antenna system with an active antenna system (AAS).

FIG. 14 illustrates exemplary UE-specific beamforming based on an AAS.

FIG. 15 illustrates an AAS based 3D beam transmission scenario.

FIG. 16 illustrates an example of applying aligned fractional precoding to a uniform linear array.

FIG. 17 illustrates an example of applying columnwise aligned fractional precoding to a square array.

FIG. 18 illustrates an example of applying rowwise aligned fractional precoding to a square array.

FIG. 19 illustrates an example of applying row group-wise aligned fractional precoding to a square array.

FIGS. 20, 21, and 22 illustrate methods for allocating a pilot pattern.

FIG. 23 is a diagram showing an example in which mismatching between layers occurs if a user equipment (UE) feeds back a H-PMI and a V-PMI.

FIG. 24 is a diagram an example of a three-dimensional (3D) reception ray cluster.

FIG. 25 is a block diagram of a communication apparatus according to an embodiment of the present invention.

[Best Mode]

Hereinafter, structures, operations, and other features of the present invention will be readily understood from the embodiments of the present invention, examples of which are illustrated in the accompanying drawings. Embodiments which will be described hereinbelow are examples in which technical features of the present invention are applied to a 3GPP system.

Although the embodiments of the present invention will be described based on an LTE system and an LTE-advanced (LTE-A) system, the LTE system and the LTE-A system are purely exemplary and the embodiments of the present invention can be applied to any communication system corresponding to the aforementioned definition. In addition, although the embodiments of the present invention will be described based on frequency division duplexing (FDD), the FDD mode is purely exemplary and the embodiments of the present invention can easily be applied to half-FDD (H-FDD) or time division duplexing (TDD) with some modifications.

In the present disclosure, a base station (eNB) may be used as a broad meaning including a remote radio head (RRH), an eNB, a transmission point (TP), a reception point (RP), a relay, etc.

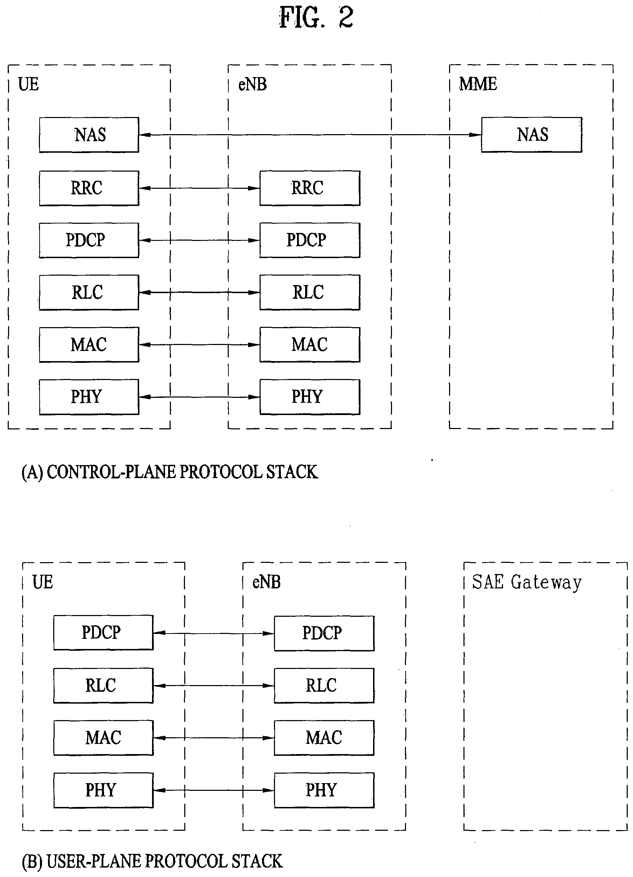

FIG. 2 is a diagram illustrating structures of a control plane and a user plane of a radio interface protocol between a UE and an E-UTRAN based on 3GPP radio access network specifications. The control plane refers to a path used for transmission of control messages, which is used by the UE and the network to manage a call. The user plane refers to a path in which data generated in an application layer, e.g. voice data or Internet packet data, is transmitted.

A physical layer of a first layer provides an information transfer service to an upper layer using a physical channel. The physical layer is connected to a media access control (MAC) layer of an upper layer via a transmission channel. Data is transmitted between the MAC layer and the physical layer via the transmission channel. Data is also transmitted between a physical layer of a transmitter and a physical layer of a receiver via a physical channel. The physical channel uses time and frequency as radio resources. Specifically, the physical channel is modulated using an orthogonal frequency division multiple Access (OFDMA) scheme in DL and is modulated using a single-carrier frequency division multiple access (SC-FDMA) scheme in UL.

The MAC layer of a second layer provides a service to a radio link control (RLC) layer of an upper layer via a logical channel. The RLC layer of the second layer supports reliable data transmission. The function of the RLC layer may be implemented by a functional block within the MAC layer. A packet data convergence protocol (PDCP) layer of the second layer performs a header compression function to reduce unnecessary control information for efficient transmission of an Internet protocol (IP) packet such as an IPv4 or IPv6 packet in a radio interface having a relatively narrow bandwidth.

A radio resource control (RRC) layer located at the bottommost portion of a third layer is defined only in the control plane. The RRC layer controls logical channels, transmission channels, and physical channels in relation to configuration, reconfiguration, and release of radio bearers. A radio bearer refers to a service provided by the second layer to transmit data between the UE and the network. To this end, the RRC layer of the UE and the RRC layer of the network exchange RRC messages. The UE is in an RRC connected mode if an RRC connection has been established between the RRC layer of the radio network and the RRC layer of the UE. Otherwise, the UE is in an RRC idle mode. A non-access stratum (NAS) layer located at an upper level of the RRC layer performs functions such as session management and mobility management.

DL transmission channels for data transmission from the network to the UE include a broadcast channel (BCH) for transmitting system information, a paging channel (PCH) for transmitting paging messages, and a DL shared channel (SCH) for transmitting user traffic or control messages. Traffic or control messages of a DL multicast or broadcast service may be transmitted through the DL SCH or may be transmitted through an additional DL multicast channel (MCH). Meanwhile, UL transmission channels for data transmission from the UE to the network include a random access channel (RACH) for transmitting initial control messages and a UL SCH for transmitting user traffic or control messages. Logical channels, which are located at an upper level of the transmission channels and are mapped to the transmission channels, include a broadcast control channel (BCCH), a paging control channel (PCCH), a common control channel (CCCH), a multicast control channel (MCCH), and a multicast traffic channel (MTCH).

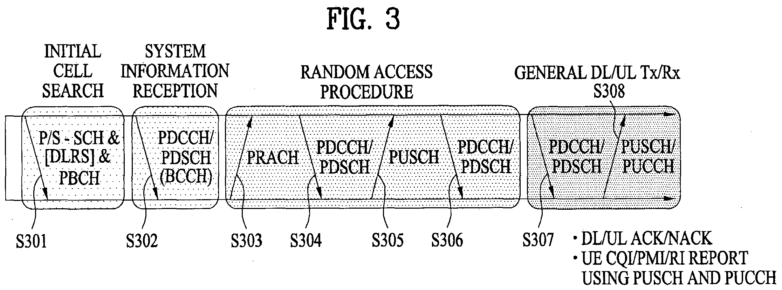

FIG. 3 is a diagram illustrating physical channels used in a 3GPP system and a general signal transmission method using the same.

When power is turned on or the UE enters a new cell, the UE performs an initial cell search procedure such as acquisition of synchronization with an eNB (S301). To this end, the UE may adjust synchronization with the eNB by receiving a primary synchronization channel (P-SCH) and a secondary synchronization channel (S-SCH) from the eNB and acquire information such as a cell identity (ID). Thereafter, the UE may acquire broadcast information within the cell by receiving a physical broadcast channel from the eNB. In the initial cell search procedure, the UE may monitor a DL channel state by receiving a downlink reference signal (DL RS).

Upon completion of the initial cell search procedure, the UE may acquire more detailed system information by receiving a physical downlink control channel (PDCCH) and receiving a physical downlink shared channel (PDSCH) based on information carried on the PDCCH (S302).

Meanwhile, if the UE initially accesses the eNB or if radio resources for signal transmission to the eNB are not present, the UE may perform a random access procedure (S303 to S306) with the eNB. To this end, the UE may transmit a specific sequence through a physical random access channel (PRACH) as a preamble (S303 and S305) and receive a response message to the preamble through the PDCCH and the PDSCH associated with the PDCCH (S304 and S306). In the case of a contention-based random access procedure, the UE may additionally perform a contention resolution procedure.

After performing the above procedures, the UE may receive a PDCCH/PDSCH (S307) and transmit a physical uplink shared channel (PUSCH)/physical uplink control channel (PUCCH) (S308), as a general UL/DL signal transmission procedure. Especially, the UE receives downlink control information (DCI) through the PDCCH. The DCI includes control information such as resource allocation information for the UE and has different formats according to use purpose thereof.

Meanwhile, control information that the UE transmits to the eNB on UL or receives from the eNB on DL includes a DL/UL acknowledgment/negative acknowledgment (ACK/NACK) signal, a channel quality indicator (CQI), a precoding matrix index (PMI), a rank indicator (RI), and the like. In the 3GPP LTE system, the UE may transmit the control information such as CQI/PMI/RI through a PUSCH and/or a PUCCH.

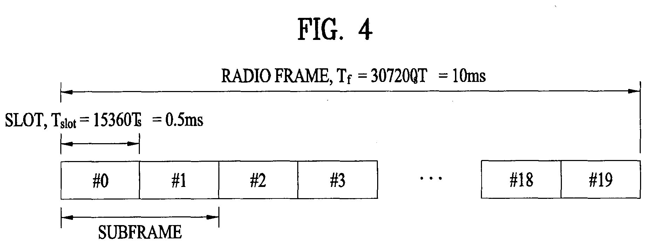

FIG. 4 is a diagram illustrating the structure of a radio frame used in an LTE system.

Referring to FIG. 4, the radio frame has a length of 10 ms ($327200 \times Ts$) and includes 10 equal-sized subframes. Each of the subframes has a length of 1 ms and includes two slots. Each slot has a length of 0.5 ms (15360 Ts). In this case, Ts denotes a sampling time represented by Ts = 1/(15 kHz x 2048) = $3.2552 \times 10^{-8}$ (about 33 ns). Each slot includes a plurality of OFDM symbols in the time domain and includes a plurality of resource blocks (RBs) in the frequency domain. In the LTE system, one RB includes 12 subcarriers x 7 (or 6) OFDM symbols. A transmission time interval (TTI), which is a unit time for data transmission, may be determined in units of one or more subframes. The above-described structure of the radio frame is purely exemplary and various modifications may be made in the number of subframes included in a radio frame, the number of slots included in a subframe, or the number of OFDM symbols included in a slot.

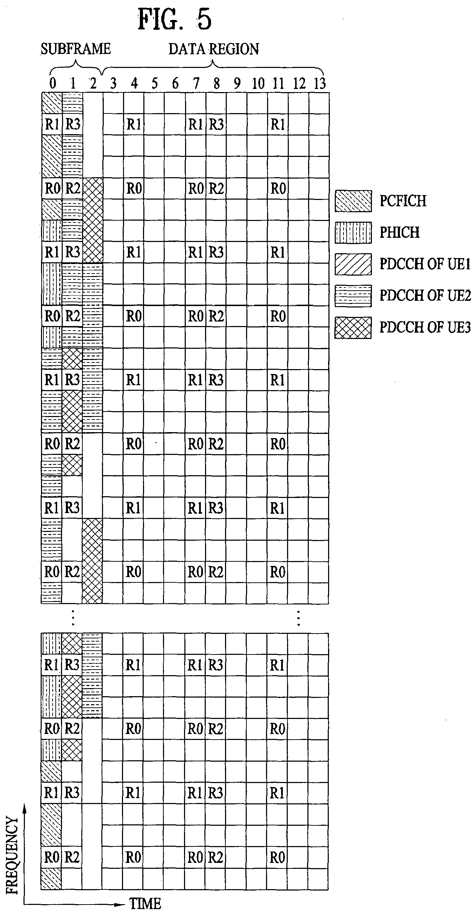

FIG. 5 is a diagram illustrating control channels contained in a control region of one subframe in a DL radio frame.

Referring to FIG. 5, one subframe includes 14 OFDM symbols. The first to third ones of the 14 OFDM symbols may be used as a control region and the remaining 11 to 13 OFDM symbols may be used as a data region, according to subframe configuration. In FIG. 5, R1 to R4 represent reference signals (RSs) or pilot signals for antennas 0 to 3, respectively. The RSs are fixed to a predetermined pattern within the subframe irrespective of the control region and the data region. Control channels are allocated to resources unused for RSs in the control region. Traffic channels are allocated to resources unused for RSs in the data region. The control channels allocated to the control region include a physical control format indicator channel (PCFICH), a physical hybrid-ARQ indicator channel (PHICH), a physical downlink control channel (PDCCH), etc.

The PCFICH, physical control format indicator channel, informs a UE of the number of OFDM symbols used for the PDCCH in every subframe. The PCFICH is located in the first OFDM symbol and is configured with priority over the PHICH and the PDCCH. The PCFICH is composed of 4 resource element groups (REGs) and each of the REGs is distributed over the control region based on a cell ID. One REG includes 4 resource elements (REs). An RE indicates a minimum physical resource defined as one subcarrier by one OFDM symbol. The PCFICH value indicates values of 1 to 3 or values of 2 to 4 depending on bandwidth and is modulated using quadrature phase shift keying (QPSK).

The PHICH, physical hybrid-ARQ indicator channel, is used to carry a HARQ ACK/NACK signal for UL transmission. That is, the PHICH indicates a channel through which DL ACK/NACK information for UL HARQ is transmitted. The PHICH includes one REG and is cell-specifically scrambled. The ACK/NACK signal is indicated by 1 bit and is modulated using binary phase shift keying (BPSK). The modulated ACK/NACK signal is spread with a spreading factor (SF) of 2 or 4. A plurality of PHICHs mapped to the same resource constitutes a PHICH group. The number of PHICHs multiplexed to the PHICH group is determined depending on the number of spreading codes. The PHICH (group) is repeated three times to obtain diversity gain in the frequency domain and/or the time domain.

The PDCCH is allocated to the first n OFDM symbols of a subframe. In this case, n is an integer equal to or greater than 1, indicated by the PCFICH. The PDCCH is composed of one or more control channel elements (CCEs). The PDCCH informs each UE or UE group of information associated with resource allocation of transmission channels, that is, a paging channel (PCH) and a downlink shared channel (DL-SCH), UL scheduling grant, HARQ information, etc. The PCH and the DL-SCH are transmitted through a PDSCH. Therefore, the eNB and the UE transmit and receive data through the PDSCH except for particular control information or service data.

Information indicating to which UE or UEs PDSCH data is to be transmitted and information indicating how UEs should receive and decode the PDSCH data are transmitted on the PDCCH. For example, assuming that a cyclic redundancy check (CRC) of a specific PDCCH is masked by a radio network temporary identity (RNTI) 'A' and information about data transmitted using a radio resource 'B' (e.g. frequency location) and using DCI format 'C', i.e. transport format information (e.g. a transport block size, a modulation scheme, coding information, etc.), is transmitted in a specific subframe, a UE located in a cell monitors the PDCCH, i.e. blind-decodes the PDCCH, using RNTI information thereof in a search space. If one or more UEs having RNTI 'A' are present, the UEs receive the PDCCH and receive a PDSCH indicated by 'B' and 'C' based on the received information of the PDCCH.

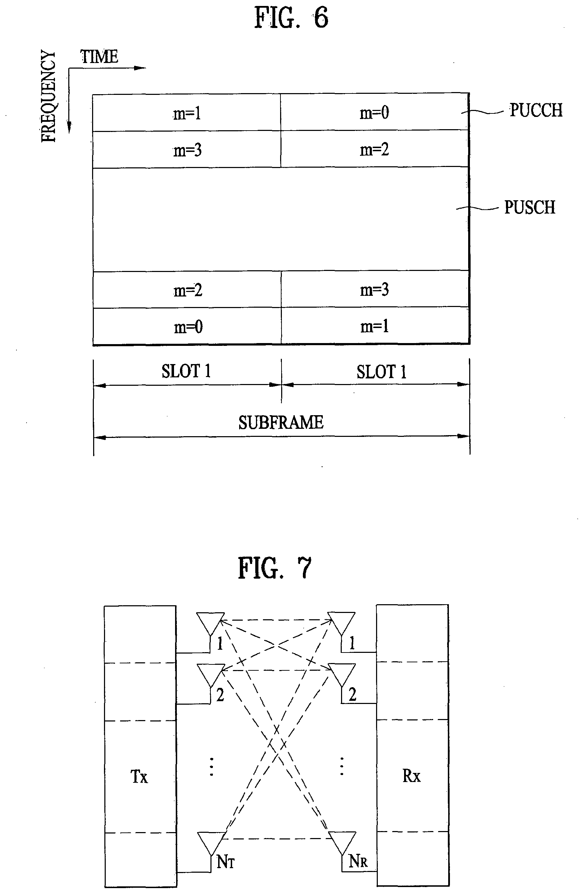

FIG. 6 is a diagram illustrating the structure of a UL subframe in an LTE system.

Referring to FIG. 6, an uplink subframe is divided into a region to which a PUCCH is allocated to transmit control information and a region to which a PUSCH is allocated to transmit user data. The PUSCH is allocated to the middle of the subframe, whereas the PUCCH is allocated to both ends of a data region in the frequency domain. The control information transmitted on the PUCCH includes an ACK/NACK, a channel quality indicator (CQI) representing a downlink channel state, an RI for Multiple Input and Multiple Output (MIMO), a scheduling request (SR) indicating a request for allocation of UL resources, etc. A PUCCH of a UE uses one RB occupying different frequencies in each slot of a subframe. That is, two RBs allocated to the PUCCH frequency-hop over the slot boundary. Particularly, PUCCHs for m=0, m=1, m=2, and m=3 are allocated to a subframe in FIG. 6.

Hereinafter, a MIMO system will be described. MIMO refers to a method using multiple transmit antennas and multiple receive antennas to improve data transmission/reception efficiency. Namely, a plurality of antennas is used at a transmitter or a receiver of a wireless communication system so that capacity can be increased and performance can be improved. MIMO may also be referred to as multi-antenna in this disclosure.

MIMO technology does not depend on a single antenna path in order to receive a whole message. Instead, MIMO technology completes data by combining data fragments received via multiple antennas. The use of MIMO technology can increase data transmission rate within a cell area of a specific size or extend system coverage at a specific data transmission rate. MIMO technology can be widely used in mobile communication terminals and relay nodes. MIMO technology can overcome a limited transmission capacity encountered with the conventional single-antenna technology in mobile communication.

FIG. 7 illustrates the configuration of a typical MIMO communication system. A transmitter has $N_T$ transmit (Tx) antennas and a receiver has $N_R$ receive (Rx) antennas. Use of a plurality of antennas at both the transmitter and the receiver increases a theoretical channel transmission capacity, compared to the use of a plurality of antennas at only one of the transmitter and the receiver. Channel transmission capacity increases in proportion to the number of antennas. Therefore, transmission rate and frequency efficiency are increased. Given a maximum transmission rate $R_o$ that may be achieved with a single antenna, the transmission rate may be increased, in theory, to the product of $R_o$ and a transmission rate increase rate $R_i$ in the case of multiple antennas, as indicated by Equation 1. $R_i$ is the smaller of $N_T$ and $N_R$.

[Equation 1]

$$R_i = \min\left(N_T, N_R\right)$$

For example, a MIMO communication system with four Tx antennas and four Rx antennas may theoretically achieve a transmission rate four times that of a single antenna system. Since the theoretical capacity increase of the MIMO wireless communication system was verified in the mid-1990s, many techniques have been actively developed to increase data transmission rate in real implementations. Some of these techniques have already been reflected in various wireless communication standards including standards for 3rd generation (3G) mobile communications, next-generation wireless local area networks, etc.

Active research up to now related to MIMO technology has focused upon a number of different aspects, including research into information theory related to MIMO communication capacity calculation in various channel environments and in multiple access environments, research into wireless channel measurement and model derivation of MIMO systems, and research into space-time signal processing technologies for improving transmission reliability and transmission rate.

Communication in a MIMO system will be described in detail through mathematical modeling. It is assumed that $N_T$ Tx antennas and $N_R$ Rx antennas are present as illustrated in FIG. 7. Regarding a transmission signal, up to $N_T$ pieces of information can be transmitted through the $N_T$ Tx antennas, as expressed as the following vector.

[Equation 2]

$$\mathbf{s} = \left[s_1, s_2, \cdots, s_{N_T}\right]^T$$

Individual pieces of the transmission information $s_1, s_2, \cdots, s_{N_T}$ may have different transmit powers. If the individual transmit powers are denoted by $P_1, P_2, \cdots, P_{N_T}$, respectively, then the transmission power-controlled transmission information may be given as

[Equation 3]

$$\hat{\mathbf{s}} = \left[\hat{s}_1, \hat{s}_2, \cdots, \hat{s}_{N_T}\right]^T = \left[P_1 s_1, P_2 s_2, \cdots, P_{N_T} s_{N_T}\right]^T$$

The transmission power-controlled transmission information vector $\hat{\mathbf{s}}$ may be expressed below, using a diagonal matrix $P$ of transmission power.

[Equation 4]

$$\hat{\mathbf{s}} = \begin{bmatrix} P_1 & & & 0 \\ & P_2 & & \\ & & \ddots & \\ 0 & & & P_{N_T} \end{bmatrix} \begin{bmatrix} s_1 \\ s_2 \\ \vdots \\ s_{N_T} \end{bmatrix} = \mathbf{Ps}$$

Meanwhile, NT transmission signals $x_1, x_2, \cdots, x_{N_T}$ to be actually transmitted may be configured by multiplying the transmission power-controlled information vector $\hat{\mathbf{s}}$ by a weight matrix **W.** The weight matrix **W** functions to appropriately distribute the transmission information to individual antennas according to transmission channel states, etc. The transmission signals $x_1, x_2, \cdots, x_{N_T}$ are represented as a vector X, which may be determined by Equation 5. Here, $W_{ij}$ denotes a weight of an i-th Tx antenna and a j-th piece of information. **W** is referred to as a weight matrix or a precoding matrix.

[Equation 5]

$$\mathbf{X} = \begin{bmatrix} x_1 \\ x_2 \\ \vdots \\ x_i \\ \vdots \\ x_{N_T} \end{bmatrix} = \begin{bmatrix} w_{11} & w_{12} & \cdots & w_{1N_T} \\ w_{21} & w_{22} & \cdots & w_{2N_T} \\ \vdots & & \ddots & \\ w_{i1} & w_{i2} & \cdots & w_{iN_T} \\ \vdots & & \ddots & \\ w_{N_T1} & w_{N_T2} & \cdots & w_{N_TN_T} \end{bmatrix} \begin{bmatrix} \hat{s}_1 \\ \hat{s}_2 \\ \vdots \\ \hat{s}_j \\ \vdots \\ \hat{s}_{N_T} \end{bmatrix} = \mathbf{W}\hat{\mathbf{s}} = \mathbf{WPs}$$

Generally, the physical meaning of the rank of a channel matrix is the maximum number of different pieces of information that can be transmitted on a given channel. Therefore, the rank of a channel matrix is defined as the smaller of the number of independent rows and the number of independent columns in the channel matrix. Accordingly, the rank of the channel matrix is not larger than the number of rows or columns of the channel matrix. The rank of the channel matrix H (rank(H)) is restricted as follows.

[Equation 6]

$$rank(\mathbf{H}) \leq \min(N_T, N_R)$$

A different piece of information transmitted in MIMO is referred to as a transmission stream or stream. A stream may also be called a layer. It is thus concluded that the number of transmission streams is not larger than the rank of channels, i.e. the maximum number of different pieces of transmittable information. Thus, the channel matrix H is determined by

[Equation 7]

$$\# of\ streams \leq rank(\mathbf{H}) \leq \min(N_T, N_R)$$

"# of streams" denotes the number of streams. It should be noted that one stream may be transmitted through one or more antennas.

One or more streams may be mapped to a plurality of antennas in many ways. This method may be described as follows depending on MIMO schemes. If one stream is transmitted through a plurality of antennas, this may be regarded as spatial diversity. When a plurality of streams is transmitted through a plurality of antennas, this may be spatial multiplexing. A hybrid scheme of spatial diversity and spatial multiplexing may be contemplated.

It is expected that the next-generation mobile communication standard, LTE-A, will support coordinated multipoint (CoMP) transmission in order to increase data transmission rate, compared to the legacy LTE standard. CoMP refers to transmission of data to a UE through cooperation among two or more eNBs or cells in order to increase communication performance between a UE located in a shadow area and an eNB (a cell or sector).

CoMP transmission schemes may be classified into CoMP-Joint processing (CoMP-JP) called cooperative MIMO characterized by data sharing, and CoMP-coordinated scheduling/beamforming (CoMP-CS/CB).

In DL CoMP-JP, a UE may instantaneously receive data simultaneously from eNBs that perform CoMP transmission and may combine the received signals, thereby increasing reception performance (joint transmission (JT)). In addition, one of the eNBs participating in the CoMP transmission may transmit data to the UE at a specific time point (dynamic point selection (DPS)).

In contrast, in downlink CoMP-CS/CB, a UE may receive data instantaneously from one eNB, that is, a serving eNB by beamforming.

In UL CoMP-JP, eNBs may receive a PUSCH signal from a UE at the same time (joint reception (JR)). In contrast, in UL CoMP-CS/CB, only one eNB receives a PUSCH from a UE. Here, cooperative cells (or eNBs) may make a decision as to whether to use CoMP-CS/CB.

Hereinbelow, a description of channel state information (CSI) reporting will be given. In the current LTE standard, a MIMO transmission scheme is categorized into open-loop MIMO operated without CSI and closed-loop MIMO operated based on CSI. Especially, according to the closed-loop MIMO system, each of the eNB and the UE may be able to perform beamforming based on CSI in order to obtain multiplexing gain of MIMO antennas. To acquire CSI from the UE, the eNB transmits RSs to the UE and commands the UE to feed back CSI measured based on the RSs through a PUCCH or a PUSCH.

CSI is divided into three types of information: an RI, a PMI, and a CQI. First, RI is information on a channel rank as described above and indicates the number of streams that can be received via the same time-frequency resource. Since RI is determined by long-term fading of a channel, it may be generally fed back at a cycle longer than that of PMI or CQI.

Second, PMI is a value reflecting a spatial characteristic of a channel and indicates a precoding matrix index of the eNB preferred by the UE based on a metric of signal-to-interference plus noise ratio (SINR). Lastly, CQI is information indicating the strength of a channel and indicates a reception SINR obtainable when the eNB uses PMI.

An advanced system such as an LTE-A system considers additional multi-user diversity through multi-user MIMO (MU-MIMO). Due to interference between UEs multiplexed in an antenna domain in MU-MIMO, the accuracy of CSI may significantly affect interference with other multiplexed UEs as well as a UE that reports the CSI. Accordingly, more accurate CSI than in single-user MIMO (SU-MIMO) should be reported in MU-MIMO.

In this context, the LTE-A standard has determined to separately design a final PMI as a long-term and/or wideband PMI, W1, and a short-term and/or subband PMI, W2.

For example, a long-term covariance matrix of channels expressed as Equation 8 may be used for hierarchical codebook transformation that configures one final PMI with W1 and W2.

[Equation 8]

$$\mathbf{W} = norm(\mathbf{W}1\,\mathbf{W}2)$$

In Equation 8, W2 is a short-term PMI, which is a codeword of a codebook reflecting short-term channel information, W is a codeword of a final codebook, and *norm*(**A**) is a matrix obtained by normalizing each column of matrix **A** to 1.

Conventionally, the codewords W1 and W2 are given as Equation 9.

[Equation 9]

$$\mathbf{W}1(i) = \begin{bmatrix} \mathbf{X}_i & \mathbf{0} \\ \mathbf{0} & \mathbf{X}_i \end{bmatrix}, \text{where } \mathbf{X}_i \text{ is Nt/2 by M matrix.}$$

$$\mathbf{W}2(j) = \overbrace{\begin{bmatrix} \mathbf{e}_M^k & \mathbf{e}_M^l & \mathbf{e}_M^m \\ \alpha_j \mathbf{e}_M^k & \beta_j \mathbf{e}_M^l & \gamma_j \mathbf{e}_M^m \end{bmatrix}}^{r\,\text{columns}} \text{ (if rank = r), where } 1 \leq k, l, m \leq \text{M and } k, l, m \text{ are integer.}$$

In Equation 9, the codewords are designed so as to reflect correlation characteristics between established channels, if cross-polarized antennas are densely arranged, for example, the distance between adjacent antennas is equal to or less than half a signal wavelength. The cross-polarized antennas may be divided into a horizontal antenna group and a vertical antenna group and the two antenna groups are co-located, each having the property of a uniform linear array (ULA) antenna.

Therefore, the correlations between antennas in each group have the same linear phase increment property and the correlation between the antenna groups is characterized by phase rotation. Since a codebook is quantized values of channels, it is necessary to design a codebook reflecting channel characteristics. For convenience of description, a rank-1 codeword designed in the above manner may be given as Equation 10.

[Equation 10]

$$\mathbf{W}1(i) * \mathbf{W}2(j) = \begin{bmatrix} \mathbf{X}_i(k) \\ \alpha_j \mathbf{X}_i(k) \end{bmatrix}$$

In Equation 10, a codeword is expressed as an $N_T \times 1$ vector where NT is the number of Tx antennas and the codeword is composed of an upper vector $\mathbf{X}_i(k)$ and a lower vector $\alpha_j\mathbf{X}_i(k)$, representing the correlation characteristics of the horizontal and vertical antenna groups, respectively. $\mathbf{X}_i(k)$ is expressed as a vector having the linear phase increment property, reflecting the correlation characteristics between antennas in each antenna group. For example, a discrete Fourier transform (DFT) matrix may be used for $\mathbf{X}_i(k)$.

An advanced system such as an LTE-A system considers achievement of an additional multi-user diversity by the use of MU-MIMO. Due to the existence of interference channels between UEs multiplexed in an antenna domain in MU-MIMO, the accuracy of CSI may significantly affect interference with other multiplexed UEs as well as a UE that reports the CSI. Accordingly, more accurate CSI than in SU-MIMO should be reported in MU-MIMO.

In CoMP JT, because a plurality of eNBs transmits the same data to a specific UE through cooperation, the eNBs may be theoretically regarded as forming a MIMO system with antennas distributed geographically. That is, even when MU-MIMO is implemented in JT, highly accurate CSI is required to avoid interference between CoMP-scheduled UEs as in a single cell MU-MIMO operation. The same applies to CoMP CB. That is, to avoid interference with a serving cell caused by a neighbor cell, accurate CSI is needed. In general, a UE needs to report an additional CSI feedback in order to increase the accuracy of CSI feedback. The CSI feedback is transmitted on a PUCCH or a PUSCH to an eNB.

Now a detailed description of an RS will be given.

In general, a transmitter transmits an RS known to both the transmitter and a receiver to the receiver along with data so that the receiver may perform channel measurement in the RS. The RS serves to perform demodulation by indicating a modulation scheme as well as channel measurement. The RS is classified into a dedicated RS (DRS) for a specific UE and a common RS (or cell-specific RS (CRS)) for all UEs within a cell. The CRS includes an RS used by a UE to measure a CQI/PMI/RI to be reported to an eNB. This RS is referred to as a channel state information-RS (CSI-RS).

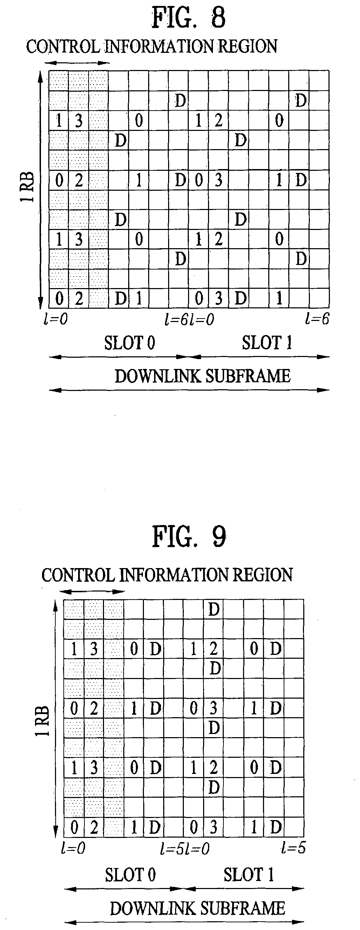

FIGs. 8 and 9 illustrate RS configurations in an LTE system supporting DL transmission through four antennas. Specifically, FIG. 8 illustrates an RS configuration in the case of a normal CP and FIG. 9 illustrates an RS configuration in the case of an extended CP.

Referring to FIGs. 8 and 9, reference numerals 0 to 3 indicated in grids denote cell-specific RSs, CRSs, transmitted through antenna port 0 to antenna port 3, for channel measurement and data modulation. The CRSs may be transmitted to UEs across a control information region as well as a data information region.

Reference character D indicated in grids denotes a UE-specific RS, i.e. a DM-RS. M-RSs are transmitted in a data region, that is, on a PDSCH, to support single-antenna port transmission. The existence/absence of a UE-specific RS, DM-RS, is indicated to a UE by higher-layer signaling. In FIGs. 8 and 9, the DM-RSs are transmitted through antenna port 5. 3GPP TS 36.211 defines DM-RSs for a total of eight antenna ports, antenna port 7 to antenna port 14.

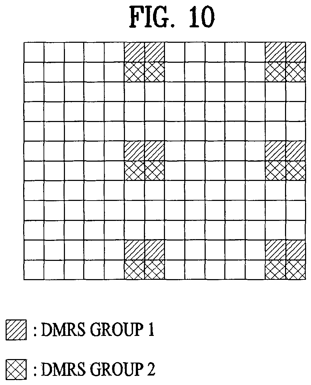

FIG. 10 illustrates exemplary DL DM-RS allocation defined in a current 3GPP standard specification.

Referring to FIG. 10, DM-RSs for antenna ports 7, 8, 11, and 13 are mapped using sequences for the respective antenna ports in DM-RS group 1, whereas DM-RSs for antenna ports 9, 10, 12, and 14 are mapped using sequences for the respective antenna ports in DM-RS group 2.

As compared to CRS, CSI-RS was proposed for channel measurement of a PDSCH and up to 32 different resource configurations are available for CSI-RS to reduce inter-cell interference (ICI) in a multi-cell environment.

A different CSI-RS (resource) configuration is used according to the number of antenna ports and adjacent cells transmit CSI-RSs according to different (resource) configurations, if possible. Unlike CRS, CSI-RS supports up to eight antenna ports and a total of eight antenna ports from antenna port 15 to antenna port 22 are allocated to CSI-RS in the 3GPP standard. Table 2 and Table 3 list CSI-RS configurations defined in the 3GPP standard. Specifically, Table 2 lists CSI-RS configurations in the case of a normal CP and Table 3 lists CSI-RS configurations in the case of an extended CP.

【Table 1】

| Frame structure | CSI reference signal configuration | Number of CSI reference signals configured | | | | | |
|---|---|---|---|---|---|---|---|
| | | 1 or 2 | | 4 | | 8 | |
| | | $(k',l')$ | $n_s \bmod 2$ | $(k',l')$ | $n_s \bmod 2$ | $(k',l')$ | $n_s \bmod 2$ |
| Frame structure type 1 and 2 | 0 | (9,5) | 0 | (9,5) | 0 | (9,5) | 0 |
| | 1 | (11,2) | 1 | (11,2) | 1 | (11,2) | 1 |
| | 2 | (9,2) | 1 | (9,2) | 1 | (9,2) | 1 |
| | 3 | (7,2) | 1 | (7,2) | 1 | (7,2) | 1 |
| | 4 | (9,5) | 1 | (9,5) | 1 | (9,5) | 1 |
| | 5 | (8,5) | 0 | (8,5) | 0 | | |
| | 6 | (10,2) | 1 | (10,2) | 1 | | |
| | 7 | (8,2) | 1 | (8,2) | 1 | | |
| | 8 | (6,2) | 1 | (6,2) | 1 | | |
| | 9 | (8,5) | 1 | (8,5) | 1 | | |
| | 10 | (3,5) | 0 | | | | |
| | 11 | (2,5) | 0 | | | | |
| | 12 | (5,2) | 1 | | | | |
| | 13 | (4,2) | 1 | | | | |
| | 14 | (3,2) | 1 | | | | |
| | 15 | (2,2) | 1 | | | | |
| | 16 | (1,2) | 1 | | | | |
| | 17 | (0,2) | 1 | | | | |
| | 18 | (3,5) | 1 | | | | |
| | 19 | (2,5) | 1 | | | | |
| Frame structure type 2 only | 20 | (11,1) | 1 | (11,1) | 1 | (11,1) | 1 |
| | 21 | (9,1) | 1 | (9,1) | 1 | (9,1) | 1 |
| | 22 | (7,1) | 1 | (7,1) | 1 | (7,1) | 1 |
| | 23 | (10,1) | 1 | (10,1) | 1 | | |
| | 24 | (8,1) | 1 | (8,1) | 1 | | |
| | 25 | (6,1) | 1 | (6,1) | 1 | | |
| | 26 | (5,1) | 1 | | | | |
| | 27 | (4,1) | 1 | | | | |
| | 28 | (3,1) | 1 | | | | |
| | 29 | (2,1) | 1 | | | | |
| | 30 | (1,1) | 1 | | | | |
| | 31 | (0,1) | 1 | | | | |

【Table 2】

| Frame structure | CSI reference signal configuration | Number of CSI reference signals configured | | | | | |
|---|---|---|---|---|---|---|---|
| | | 1 or 2 | | 4 | | 8 | |
| | | $(k',l')$ | $n_s \bmod 2$ | $(k',l')$ | $n_s \bmod 2$ | $(k',l')$ | $n_s \bmod 2$ |
| Frame structure type 1 and 2 | 0 | (11,4) | 0 | (11,4) | 0 | (11,4) | 0 |
| | 1 | (9,4) | 0 | (9,4) | 0 | (9,4) | 0 |
| | 2 | (10,4) | 1 | (10,4) | 1 | (10,4) | 1 |
| | 3 | (9,4) | 1 | (9,4) | 1 | (9,4) | 1 |
| | 4 | (5,4) | 0 | (5,4) | 0 | | |
| | 5 | (3,4) | 0 | (3,4) | 0 | | |
| | 6 | (4,4) | 1 | (4,4) | 1 | | |
| | 7 | (3,4) | 1 | (3,4) | 1 | | |
| | 8 | (8,4) | 0 | | | | |
| | 9 | (6,4) | 0 | | | | |
| | 10 | (2,4) | 0 | | | | |

| | | | | | | | |
|---|---|---|---|---|---|---|---|
| | 11 | (0,4) | 0 | | | | |
| | 12 | (7,4) | 1 | | | | |
| | 13 | (6,4) | 1 | | | | |
| | 14 | (1,4) | 1 | | | | |
| | 15 | (0,4) | 1 | | | | |
| Frame structure type 2 only | 16 | (11,1) | 1 | (11,1) | 1 | (11,1) | 1 |
| | 17 | (10,1) | 1 | (10,1) | 1 | (10,1) | 1 |
| | 18 | (9,1) | 1 | (9,1) | 1 | (9,1) | 1 |
| | 19 | (5,1) | 1 | (5,1) | 1 | | |
| | 20 | (4,1) | 1 | (4,1) | 1 | | |
| | 21 | (3,1) | 1 | (3,1) | 1 | | |
| | 22 | (8,1) | 1 | | | | |
| | 23 | (7,1) | 1 | | | | |
| | 24 | (6,1) | 1 | | | | |
| | 25 | (2,1) | 1 | | | | |
| | 26 | (1,1) | 1 | | | | |
| | 27 | (0,1) | 1 | | | | |

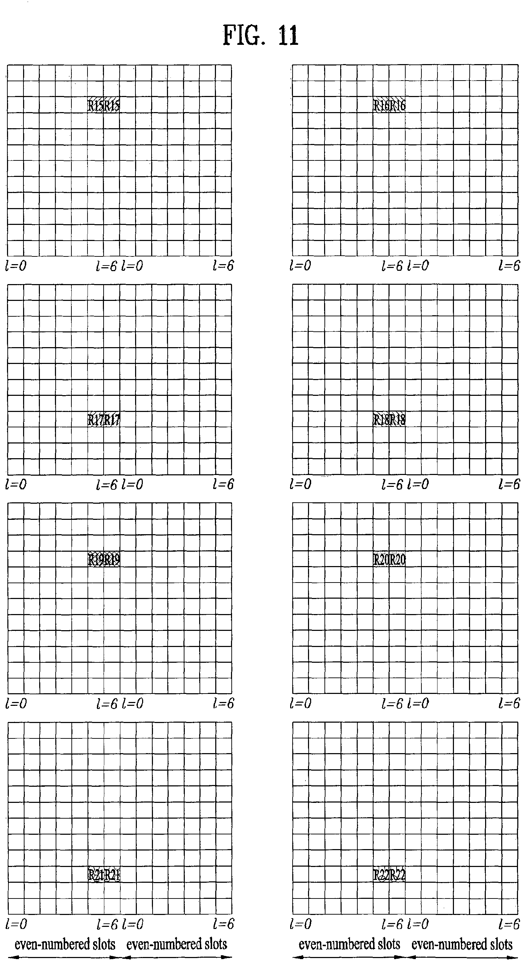

In Table 1 and Table 2, $(k',l')$ represents an RE index where $k'$ is a subcarrier index and $l'$ is an OFDM symbol index. FIG. 11 illustrates CSI-RS configuration #0 of DL CSI-RS configurations defined in the current 3GPP standard.

In addition, a CSI-RS subframe configuration may be defined by a periodicity in subframes, $T_{CSI-RS}$, and a subframe offset $\Delta_{CSI-RS}$. Table 3 lists CSI-RS subframe configurations defined in the 3GPP standard.

[Table 3]

| CSI-RS-SubframeConfig $I_{CSI-RS}$ | CSI-RS periodicity $T_{CSI-RS}$ (subframes) | CSI-RS subframe offset $\Delta_{CSI-RS}$ (subframes) |
|---|---|---|
| 0 - 4 | 5 | $I_{CSI-RS}$ |
| 5 - 14 | 10 | $I_{CSI-RS}$ - 5 |
| 15 - 34 | 20 | $I_{CSI-RS}$ - 15 |
| 35 - 74 | 40 | $I_{CSI-RS}$ - 35 |
| 75 - 154 | 80 | $I_{CSI-RS}$ - 75 |

Meanwhile, information about a zero power (ZP) CSI-RS illustrated in Table 4 is configured through an RRC layer signal. Particularly, a ZP CSI-RS resource configuration includes zeroTxPowerSubframeConfig and zeroTxPowerResourceConfigList of a 16-bit bitmap. zeroTxPowerSubframeConfig indicates a CSI-RS transmission periodicity and subframe offset of a ZP CSI-RS by $I_{CSI-RS}$ illustrated in Table 3. zeroTxPowerResourceConfigList indicates a ZP CSI- RS configuration. The elements of this bitmap indicate the respective configurations included in the columns for four CSI-RS antenna ports in Table 1 or Table 2. A normal CSI-RS other than ZP CSI-RS is referred to as non zero-power (NZP) CSI-RS.

【Table 4】

```
-- ASN1START

CSI-RS-Config-r10 ::=        SEQUENCE {
    csi-RS-r10                      CHOICE {

        ...

    }

    zeroTxPowerCSI-RS-r10           CHOICE {
        release                         NULL,
        setup                           SEQUENCE {
            zeroTxPowerResourceConfigList-r10      BIT STRING (SIZE (16)),
            zeroTxPowerSubframeConfig-r10          INTEGER (0..154)
        }
    }
}

-- ASN1STOP
```

The current 3GPP standard defines modulation orders and cording rates for respective CQI indexes as illustrated in Table 5.

[Table 5]

| CQI index | modulation | code rate x 1024 | efficiency |
|-----------|------------|------------------|------------|
| 0 | out of range | | |
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| 6 | QPSK | 602 | 1.1758 |
| 7 | 16QAM | 378 | 1.4766 |
| 8 | 16QAM | 490 | 1.9141 |
| 9 | 16QAM | 616 | 2.4063 |
| 10 | 64QAM | 466 | 2.7305 |
| 11 | 64QAM | 567 | 3.3223 |
| 12 | 64QAM | 666 | 3.9023 |
| 13 | 64QAM | 772 | 4.5234 |
| 14 | 64QAM | 873 | 5.1152 |
| 15 | 64QAM | 948 | 5.5547 |

A CQI is calculated based on interference measurement as follows.

A UE needs to measure a Signal to Interference and Noise Ratio (SINR) for CQI calculation. In this case, the UE may measure the reception power (S-measure) of a desired signal in an RS such as a Non-Zero Power (NZP) CSI-RS. For interference power measurement (I-measure or Interference Measurement (IM)), the UE measures the power of an interference signal resulting from eliminating the desired signal from a received signal.

CSI measurement subframe sets $C_{CSI,0}$ and $C_{CSI,1}$ may be configured by higher-layer signaling and the subframes of each subframe set are different from the subframes of the other subframe set. In this case, the UE may perform S-measure in an RS such as a CSI-RS without any specific subframe constraint. However, the UE should calculate CQIs separately for the CSI measurement subframe sets $C_{CSI,0}$ and $C_{CSI,1}$ through separate I-measures in the CSI measurement subframe sets $C_{CSI,0}$ and $C_{CSI,1}$.

Now a description will be given of QCL between antenna ports.

If one antenna port is quasi co-located with another antenna port, this means that a UE may assume that the large-scale properties of a signal received from one antenna port (or a radio channel corresponding to the antenna port) are wholly or partially identical to those of a signal received from another antenna port (or a radio channel corresponding to the antenna port). The large-scale properties may include Doppler spread and Doppler shift which are associated with a frequency offset, average delay and delay spread which are associated with a timing offset, and average gain.

According to the definition of QCL, the UE may not assume that antenna ports that are not quasi co-located with each other have the same large-scale properties. Therefore, the UE should independently perform a tracking procedure in order to obtain the frequency offset and timing offset of each antenna port.

Meanwhile, the UE may perform the following operations regarding quasi co-located antenna ports.

1) The UE may identically apply estimated results of a power-delay profile of a radio channel corresponding to a specific antenna port, delay spread, Doppler spectrum, and Doppler spread to Wiener filter parameters used in channel estimation of a radio channel corresponding another antenna port.

2) The UE may acquire time synchronization and frequency synchronization of the specific antenna port and apply the same synchronization to another antenna port.

3) Finally, the UE may calculate the average of reference signal received power (RSRP) measurements of the quasi co-located antenna ports as an average gain.

For example, it is assumed that upon receipt of scheduling information of a DM-RS based DL data channel, e.g. DCI format 2C, through a PDCCH (or an enhanced PDCCH (E-PDCCH)), the UE performs channel estimation on a PDSCH using a DM-RS sequence indicated by the scheduling information and then demodulates data.

In this case, if a DM-RS antenna port for DL data channel demodulation is quasi co-located with a CRS antenna port of a serving cell, the UE may apply large-scale properties of a radio channel, which have been estimated from the CRS antenna port thereof, to channel estimation through the DM-RS antenna port, thereby improving the reception performance of the DM-RS based DL data channel.

Similarly, if the DM-RS antenna port for DL data channel demodulation is quasi co-located with the CSI-RS antenna port of the serving cell, the UE may apply large-scale properties of a radio channel, which have been estimated from the CSI-RS antenna port of the serving cell, to channel estimation through the DM-RS antenna port, thereby improving the reception performance of the DM-RS based DL data channel.

Meanwhile, in LTE, it is regulated that when a DL signal is transmitted in mode 10 being a CoMP transmission mode, an eNB configures one of QCL type A and QCL type B for a UE.

QCL type A is based on the premise that a CRS antenna port, a DM-RS antenna port, and a CSI-RS antenna port are quasi co-located with large-scale properties except average gain. This means that physical channels and signals are transmitted in the same point. On the other hand, QCL type B is defined such that up to four QCL modes are configured for each UE by a higher-layer message to enable CoMP transmission such as DPS or JT and which QCL mode is used to receive a DL signal is dynamically configured through DCI.

DPS transmission in the case of QCL type B will now be described in more detail.

It is assumed that node #1 having N1 antenna ports transmits CSI-RS resource #1 and node #2 having N2 antenna ports transmits CSI-RS resource #2. In this case, CSI-RS resource #1 is included in QCL mode parameter set #1 and CSI-RS resource #2 is included in QCL mode parameter set #2. Further, an eNB configures QCL mode parameter set #1 and CSI-RS resource #2 for a UE located within a common overage of node #1 and node #2 by a higher-layer signal.

Then, the eNB may perform DPS by configuring, using DCI, QCL mode parameter set #1 for the UE during data (i.e. a PDSCH) transmission to the UE through node #1 and configuring QCL mode parameter set #2 for the UE during data transmission to the UE through node #2. If QCL mode parameter set #1 is configured for the UE through the DCI, the UE may assume that CSI-RS resource #1 is quasi co-located with a DM-RS and if QCL mode parameter set #2 is configured for the UE, the UE may assume that CSI-RS resource #2 is quasi co-located with the DM-RS.

An active antenna system (AAS) and three-dimensional beamforming will be described below.

In a legacy cellular system, an eNB reduces ICI and increases the throughput of UEs within a cell, e.g. SINRs, by mechanical tilting or electrical tilting, which will be described below in more detail.

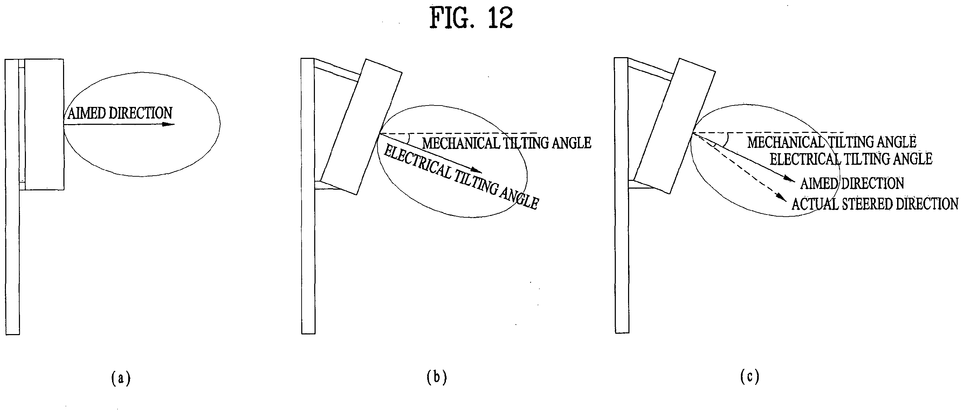

FIG. 12 is a diagram illustrating an antenna tilting scheme. Specifically, FIG. 12(a) illustrates an antenna structure to which antenna tilting is not applied, FIG. 12(b) illustrates an antenna structure to which mechanical tilting is applied, and FIG. 12(c) illustrates an antenna structure to which both mechanical tilting and electrical titling are applied.

In comparison with FIG. 12(a), mechanical tilting of FIG. 12(b) causes a beam direction to be fixed at initial antenna installation. Electrical tilting of FIG. 12(c) allows only very restrictive vertical beamforming due to cell-fixed tilting, despite the advantage of changing a tilting angle through an internal phase shift module.

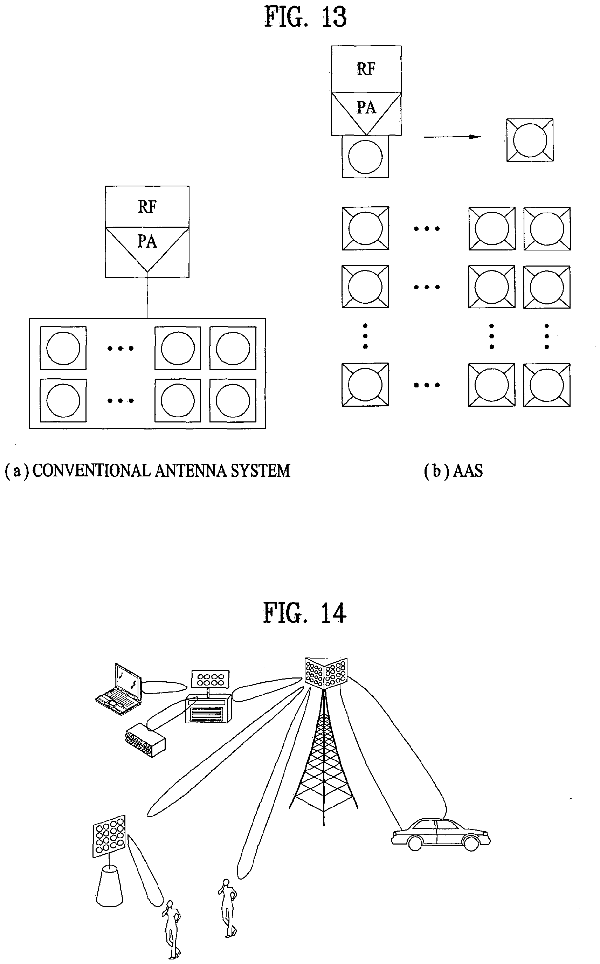

FIG. 13 is a diagram comparing a conventional antenna system with an AAS. Specifically, FIG. 13(a) illustrates the antenna system of the related art and FIG. 13(b) illustrates the AAS.

Referring to FIG. 13, as compared to the conventional antenna system, the AAS includes a plurality of antenna modules, each of which includes a radio frequency (RF) module such as a power amplifier (PA), that is, an active device so that the AAS can control the power and phase of each antenna module.

Generally, a linear array antenna, i.e. a one-dimensional array antenna, such as a ULA has been considered as a MIMO antenna structure. In a one-dimensional array structure, a beam that may be formed by beamforming exists on a two-dimensional (2D) plane. The same applies to a passive antenna system (PAS) based MIMO structure of a legacy eNB. Although a PAS based eNB has vertical antennas and horizontal antennas, the vertical antennas may not form a beam in a vertical direction and may allow only the afore-described mechanical tilting because the vertical antennas are in one RF module.

However, as the antenna structure of an eNB has evolved into an AAS, RF modules are independently configured even in vertical antennas. Consequently, vertical beamforming as well as horizontal beamforming is possible. This is called vertical beamforming or elevation beamforming.

The vertical beamforming may also be referred to as three-dimensional (3D) beamforming in that beams that can be generated according to the vertical beamforming may be formed in a 3D space in the vertical and horizontal directions. That is, the evolution of a one-dimensional array antenna structure to a 2D array antenna structure enables 3D beamforming. 3D beamforming is not necessarily formed when an antenna array is planar. Rather, 3D beamforming may be formed even in a ring-shaped 3D array structure. A feature of 3D beamforming lies in that a MIMO process is implemented on a 3D space in view of various antenna layouts other than existing one-dimensional antenna structures.

FIG. 14 illustrates exemplary UE-specific beamforming based on an AAS. Referring to FIG. 14, even though a UE moves forward or backward from an eNB as well as to the left and right of the eNB, a beam may be formed toward the UE by 3D beamforming. Therefore, a higher degree of freedom is given to UE-specific beamforming.

Further, as transmission environments using an AAS based 2D array antenna structure, not only an outdoor-to-outdoor environment where an outdoor eNB transmits a signal to an outdoor UE but also an outdoor-to-indoor (O2I) environment where an outdoor eNB transmits a signal to an indoor UE and an indoor hotspot where an indoor eNB transmits a signal to an indoor UE may be considered.

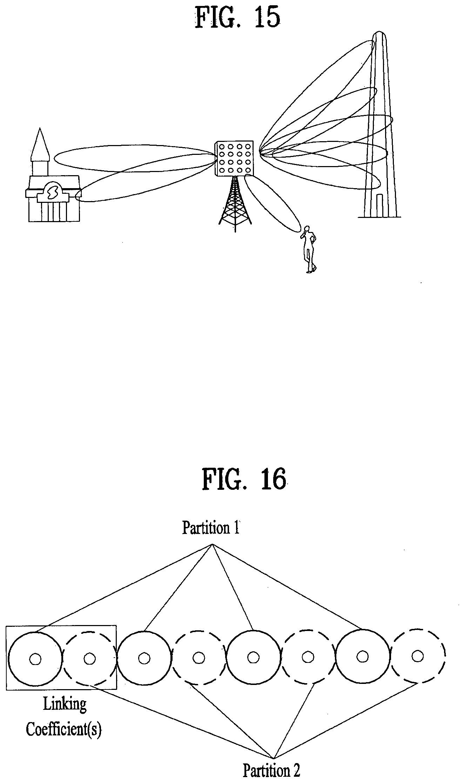

FIG. 15 illustrates an AAS based 3D beam transmission scenario.

Referring to FIG. 15, an eNB needs to consider vertical beam steering based on various UE heights in relation to building heights as well as UE-specific horizontal beam steering in a real cell environment in which a plurality of buildings is present in a cell. Considering this cell environment, significantly different channel characteristics from those of an existing wireless channel environment, for example, shadowing/pathloss changes according to different heights, fading characteristic variations, etc. need to be reflected.

In other words, 3D beamforming is an evolution of beamforming in the horizontal direction only, based on an existing linear one-dimensional antenna array structure. 3D beamforming refers to a MIMO processing scheme performed by extending horizontal beamforming to elevation beamforming or vertical beamforming or combining horizontal beamforming with elevation beamforming or vertical beamforming, based on a multi-dimensional array antenna structure such as a planar array or on a massive antenna array.

Now a description will be given of a MIMO system using linear precoding. A downlink MIMO system may be modeled as shown in Equation 11 below in frequency units (e.g., subcarrier units) on the assumption of undergoing flat fading to a frequency side in a narrowband system or a wideband system.

$$[\text{Equation 11}]$$

$$\mathbf{y} = \mathbf{H}\mathbf{x} + \mathbf{z}$$

If the number of Rx antenna ports at a UE is $N_r$ and the number of Tx antenna ports at an eNB is $N_t$, $\mathbf{y}$ is an $N_r \times 1$ signal vector received at the $N_r$ Rx antennas of the UE, $\mathbf{H}$ is a MIMO channel matrix of size $N_r \times N_t$, $\mathbf{x}$ is $N_t \times 1$ transmission signals, and z is an $N_r \times 1$ received noise and interference vector in Equation 11.

The above system model is applicable to a multi-user MIMO scenario as well as a single-user MIMO scenario. While $N_r$ is the number of Rx antennas at the single UE in the single-user MIMO scenario, $N_r$ may be interpreted as the total number of Rx antennas at multiple UEs in the multi-user MIMO scenario.

The above system model is applicable to a UL transmission scenario as well as a DL transmission scenario. Then, $N_t$ may represent the number of Tx antennas at the UE and $N_r$ may represent the number of Rx antennas at the eNB.

In the case of a linear MIMO precoder, the MIMO precoder may be generally represented as a matrix **U** of size $N_t \times N_s$ where $N_s$ is a transmission rank or the number of transmission layers. Accordingly, the transmission signal vector **x** may be modeled as Equation 12.

[Equation 12]

$$\mathbf{x} = \sqrt{\frac{P_T}{N_s}} \mathbf{U} \mathbf{s}$$

where $P_T$ is transmission signal energy and **s** is an $N_s \times 1$ transmission signal vector representing signals transmitted in $N_s$ transmission layers. That is,

$E\{\mathbf{s}^H\mathbf{U}^H\mathbf{U}\mathbf{s}\} = N_s$. Let $N_t \times 1$ precoding vectors corresponding to the $N_s$ transmission layers be denoted by $\mathbf{u}_1,\cdots,\mathbf{u}_{Ns}$. Then, **U** = [$\mathbf{u}_1 \cdots \mathbf{u}_{Ns}$]. In this case, [Equation 12] may be expressed as Equation 13.

[Equation 13]

$$\mathbf{x} = \sqrt{\frac{P_T}{N_s}} \sum_{i=1}^{N_s} \mathbf{u}_i s_i$$

where $s_i$ is an ith element of the vector **s**. Generally, it may be assumed that signals transmitted in different layers are uncorrelated $\left( E\{s_j^* s_i\} = 0 \ \forall \ i \neq j \right)$ and the average magnitude of each signal is the same. If it is assumed that the average energy of each signal is 1 ($E\{|s_i|^2\} = 1 \ \forall \ i$), for the convenience of description, the sum of the energy of the layer precoding vectors is $N_s$ given as Equation 14.

[Equation 14]

$$\sum_{i=1}^{N_s} E\{\mathbf{u}_i^H \mathbf{u}_i\} = N_s$$

If a signal is to be transmitted with the same power in each layer, it is noted from Equation 14 that $E\{\mathbf{u}_i^H \mathbf{u}_i\} = 1$.

As a future multi-antenna system such as massive MIMO or large-scale MIMO evolves, the number of antennas will increase gradually. In fact, use of up to 64 Tx antennas is considered for an eNB in the LTE standard, taking into account a 3D MIMO environment.

However, as the number of antennas increases, pilot overhead and feedback overhead also increase. As a result, decoding complexity may be increased. Since the size of the MIMO channel matrix **H** increases with the number of antennas at an eNB, the eNB should transmit more measurement pilots to a UE so that the UE may estimate the MIMO channels. If the UE feeds back explicit or implicit information about the measured MIMO channels to the eNB, the amount of feedback information will increase as the channel matrix gets larger. Particularly when a codebook-based PMI feedback is transmitted as in the LTE system, the increase of antennas in number leads to an exponential increase in the size of a PMI codebook. Consequently, the computation complexity of the eNB and the UE is increased.

In this environment, system complexity and overhead may be mitigated by partitioning total Tx antennas and thus transmitting a pilot signal or a feedback on a sub-array basis. Especially from the perspective of the LTE standard, a large-scale MIMO system may be supported by reusing most of the conventional pilot signal, MIMO precoding scheme, and/or feedback scheme that support up to 8 Tx antennas.

From this viewpoint, if each layer precoding vector of the above MIMO system model is partitioned into M sub-precoding vectors and the sub-precoding vectors of a precoding vector for an ith layer are denoted by $\mathbf{u}_{i,1},\cdots,\mathbf{u}_{i,M}$, the

$$\mathbf{u}_i = [\mathbf{u}_{i,1}^T \; \mathbf{u}_{i,2}^T \cdots \mathbf{u}_{i,M}^T]^T$$

precoding vector for the ith layer may be represented as .

Each sub-precoding vector experiences, as effective channels, a sub-channel matrix including Tx antennas in a partition corresponding to the sub-precoding vector, obtained by dividing the $N_r \times N_t$ MIMO channel matrix **H** by rows. The MIMO channel matrix **H** is expressed using the sub-channel matrices, as follows.

[Equation 15]

$$\mathbf{H} = \begin{bmatrix} \mathbf{H}_1 \cdots \mathbf{H}_M \end{bmatrix}$$

If the UE determines each preferred sub-precoding vector based on a PMI codebook, an operation for normalizing each sub-precoding vector is needed. Normalization refers to an overall operation for processing the value, size, and/or phase of a precoding vector or a specific element of the precoding vector in such a manner that sub-precoding vectors of the same size may be selected from a PMI codebook for the same number of Tx antennas.

For example, if the first element of the PMI codebook is 0 or 1, the phase and size of each sub-precoding vector may be normalized with respect to 0 or 1. Hereinbelow, it is assumed that a sub-precoding vector $\mathbf{u}_{i,m}$ for an $m$ th partition is normalized with respect to a value of $\alpha_{i,m}$ and the normalized sub-precoding vector or the Normalized Partitioned Precoder (NPP) is $\mathbf{v}_{i,m} = \mathbf{u}_{i,m}/\alpha_{i,m}$. Therefore, partitioned precoding is modeled as Equation 16, in consideration of codebook-based precoding.

[Equation 16]

$$\mathbf{u}_i = [\alpha_{i,1}\mathbf{v}_{i,1}^T \; \alpha_{i,2}\mathbf{v}_{i,2}^T \cdots \alpha_{i,M}\mathbf{v}_{i,M}^T]^T$$

As noted from Equation 16, the values of $\alpha_{i,m}$ may be interpreted as values that link the NPPs to each other from the perspective of the whole precoder. Hereinafter, these values will be referred to as linking coefficients. Thus, a precoding method for the total Tx antennas (antenna ports) may be defined by defining NPPs for the partitions of antenna ports and linking coefficients that link the NPPs to one another.

$M$ linking coefficients for the ith layer may be defined as a vector $\mathbf{a}_i = [\alpha_{i,1} \; \alpha_{i,2} \cdots \alpha_{i,M}]^T$. Herein, $\mathbf{a}_i$ will be referred to as a 'linking vector'.

While it may be said that the linking vector is composed of $M$ values, the other ($M$ -1) values $\mathbf{b}_i$ normalized with respect to the first element of the linking vector may be regarded as the linking vector. That is, the relative differences of the other ($M$ -1) NPPs with respect to the first NPP may be defined as a linking vector as expressed in Equation 17. This is because it is assumed in many cases that the first element is already normalized from the perspective of the whole precoding vector $\mathbf{u}_i$.

[Equation 17]

$$\frac{\mathbf{a}_i}{\alpha_{i,1}} = [1 \; \frac{\alpha_{i,2}}{\alpha_{i,1}} \; \frac{\alpha_{i,3}}{\alpha_{i,1}} \cdots \frac{\alpha_{i,M}}{\alpha_{i,1}}]^T = [1 \; \mathbf{b}_i^T]^T$$

If each of the transmission layers is divided into the same number of partitions, a linking matrix expressed as Equation 18 may also be defined. An NPP for each partition in the form of a matrix may be defined as Equation 19. 1

[Equation 18]

$$\mathbf{A} = \begin{bmatrix} \mathbf{a}_1 \cdots \mathbf{a}_{N_s} \end{bmatrix}$$

[Equation 19]

$$\mathbf{V}_m = \begin{bmatrix} \mathbf{v}_{1,m} \cdots \mathbf{v}_{N_s,m} \end{bmatrix}, \quad m = 1, \cdots, M$$

Let a vector obtained by repeating each element of an $M \times 1$ linking vector as many times as the size of each partition be denoted by an extended linking vector $\hat{\mathbf{a}}_i$. For example, if M=2 and the sizes of the first and second partitions are 3 and 4, respectively for an ith layer, $\hat{\mathbf{a}}_i = [\alpha_{i,1} \ \alpha_{i,1} \ \alpha_{i,1} \ \alpha_{i,2} \ \alpha_{i,2} \ \alpha_{i,2} \ \alpha_{i,2}]^T$. An extended linking matrix $\hat{\mathbf{A}} = [\hat{\mathbf{a}}_1 \cdots \hat{\mathbf{a}}_{N_s}]$ may be defined by stacking the extended linking vectors.

In this case, the whole precoding matrix may be expressed as a Hadamard product (or element-wise product) between the extended linking matrix and the NPP matrix $\mathbf{V}_t$ in Equation 20.

$$[\text{Equation 20}]$$

$$\mathbf{U} = \hat{\mathbf{A}} \circ \mathbf{V}_t$$

$$\mathbf{V}_t = \begin{bmatrix} \mathbf{V}_1^T \cdots \mathbf{V}_M^T \end{bmatrix}^T$$

In Equation 20, and the matrix operator $\circ$ represents the Hadamard product.

The (extended) linking vectors and the (extended) linking matrix are collectively called a linking precoder. The term precoder is used herein because the (extended) linking vectors and the (extended) linking matrix are elements determining the Tx antenna precoder. As noted from [Equation 20], one linking precoder may be configured, which should not be construed as limiting the present invention. For example, a plurality of sub-linking vectors may be configured by additional partitioning of the linking vector $\mathbf{a}_i$ and sub-linking precoders may be defined accordingly. While the following description is given in the context of a single linking precoder, a linking precoder partitioning scenario is not excluded.

While the linking coefficients are represented in such a manner that different linking coefficients are applicable to different transmission layers in the same partition, if each layer is partitioned in the same manner, the linking coefficients may be configured independently of the transmission layers. That is, the same linking coefficients may be configured for every layer. In this case, the relationship that $\mathbf{a} \square \mathbf{a}_1 = \cdots = \mathbf{a}_{N_s}$ is established between the linking vectors. Then the linking precoder may be expressed only with $M$ or ($M$ - 1) linking coefficients.

MIMO precoding schemes may be categorized largely into closed-loop precoding and open-loop precoding. When a MIMO precoder is configured, channels between a transmitter and a receiver are considered in the closed-loop precoding scheme. Therefore, additional overhead such as transmission of a feedback signal from a UE or transmission of a pilot signal is required so that the transmitter may estimate MIMO channels. If the channels are accurately estimated, the closed-loop precoding scheme outperforms the open-loop precoding scheme. Thus, the closed-loop precoding scheme is used mainly in a static environment experiencing little channel change between a transmitter and a receiver (e.g. an environment with a low Doppler spread and a low delay spread) because the closed-loop precoding scheme requires channel estimation accuracy. On the other hand, the open-loop precoding scheme outperforms the closed-loop precoding scheme in an environment experiencing a great channel change between a transmitter and a receiver because there is no correlation between the channel change between the transmitter and the receiver and a MIMO precoding scheme.

To apply closed-loop precoding to a massive MIMO environment having a large number of antennas, information about each sub-precoder and information about a linking precoder are required. Without codebook-based feedback, the linking precoder information may not be needed. Depending on a partitioning method, effective channels experienced by each sub-precoder may have different characteristics from effective channels experienced by the linking precoder.

For example, one sub-precoder may experience MIMO channels having a relatively low Doppler spread, whereas another sub-precoder may experience MIMO channels having a relatively high Doppler spread. In another example, while all sub-precoders may experience effective channels having similar Doppler characteristics, the linking precoder may experience effective channels having different Doppler characteristics. Accordingly, a detailed description will be given of a factional beamforming scheme that optimizes MIMO transmission adaptively according to the characteristics of each partitioned channel and a linking channel in the partitioned precoding environment.

**< Fractional Beamforming >**

An eNB may apply closed-loop precoding only to a part of precoders for partitions of antenna ports and a linking precoder that links the antenna port partitions to one another and may apply one of the following precoding schemes to the remaining part of the remaining part of the precoders and the linking precoder.

1. System-set precoding (hereinafter, referred to as default precoding);
2. Precoding preset by an eNB or a network (hereinafter, referred to as reference precoding); and
3. Precoding randomly selected by an eNB (hereinafter, referred to as random precoding).

A set of partitions and/or linking coefficients to which closed-loop precoding is applied is referred to as a controlled space and a set of partitions and/or linking coefficients to which closed-loop precoding is not applied is referred to as an uncontrolled space.

In default precoding, the system defines a beam for transmission in the uncontrolled space. It may be regulated that default precoding follows open-loop precoding. A different default precoding scheme may be set according to a system bandwidth, the number of Tx antennas at an eNB, the number of transmission layers (or a transmission rank), a Tx antenna configuration of the eNB ($N_{t\_v}$, $N_{t\_h}$), or the number of Tx antennas directed in an uncontrolled direction. Or a specific beam may be set irrespective of the system parameters in the default precoding scheme. In addition, the default precoding scheme may be fixed across a total frequency band and a total time area or may be changed on a predetermined time resource unit basis and/or a predetermined frequency resource unit basis.

In reference precoding, the eNB or the network configures a precoding scheme to be applied to the uncontrolled space for a UE. Accordingly, reference precoding information for the uncontrolled space is transmitted to the UE by a physical layer message or a higher layer message. The reference precoding information is any information that indicates a MIMO precoder to be applied to the uncontrolled space implicitly or explicitly. For example, the reference precoding information may include a specific index (PMI) of a PMI codebook corresponding to the number of uncontrolled space Tx antennas, the quantized value of each element of a MIMO precoding matrix for the uncontrolled space, and an index for use in transmission, selected from among the indexes of a plurality of MIMO precoding schemes.

Reference precoding may also be changed on a predetermined time resource unit basis and/or a predetermined frequency resource unit basis. In this case, a plurality of reference precoding patterns that change in time/frequency resources are defined and then the index of a reference precoding pattern used by the eNB or the network may be signaled as reference precoding information. Or a seed value of a random variable generator that may induce reference precoding patterns that change in time/frequency resources may be used as reference precoding information. Or reference precoding information may be configured to indicate a used precoding scheme selected from among various precoding schemes (e.g. Space Time Block Coding (STBC), delay diversity, etc.).

In random precoding, the eNB randomly selects a precoding scheme for the uncontrolled space. Therefore, compared to default precoding or reference precoding, the UE does not have knowledge of a precoder to be applied to the uncontrolled space. For example, the eNB may transmit a beam that changes randomly in the uncontrolled space on a predetermined time resource basis (e.g. on an OFDM symbol basis) and/or a predetermined frequency resource unit basis (e.g. on a subcarrier basis).

According to the fractional beamforming, independent partitioning and fractional beamforming may be applied to each transmission layer. Or the same partitioning and beamforming scheme may be applied to all transmission layers.

The fractional beamforming method is very useful, when the reliability of feedback information about a part of Tx antennas or the reliability of feedback information about linking coefficients is low or in a channel environment that does not require such a feedback. Especially when the reliability of feedback information about a part of Tx antennas or the reliability of feedback information about linking coefficients is low, the fractional beamforming method is advantageous in that a packet reception error and unnecessary packet retransmission caused by a feedback information error can be prevented. In addition, when the feedback is unnecessary, the fractional beamforming method can minimize feedback overhead.

## < Aligned Fractional Precoding >

If a part or all of antenna port partitions are of the same size and corresponding partitioned antenna arrays have similar effective channel characteristics, the same precoding scheme, that is, aligned fractional precoding may be applied to corresponding NPPs.

FIG. 16 illustrates an example of applying aligned fractional precoding to a Uniform Linear Array (ULA).

Referring to FIG. 16, in a ULA with 8 antennas, a first partition (Partition 1) includes 1st, 3rd, 5th, and 7th antennas and a second partition (Partition 2) includes 2nd, 4th, 6th, and 8th antennas. If the gap between antennas is narrow and there are not many scatterers around the ULA, Partition 1 and Partition 2 are highly likely to experience similar MIMO channels except for a phase difference between the two partitions, corresponding to a linking precoder component. In this case, the same precoding scheme is configured for the two partitions.

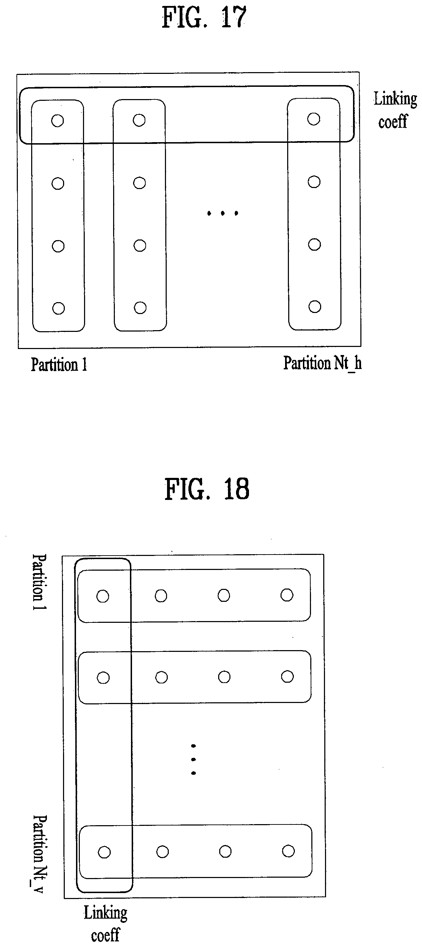

FIG. 17 illustrates an example of applying columnwise aligned fractional precoding to a square array.

Referring to FIG. 17, each column is set as one partition in a square array having $N_t(= N_{t\_v} \times N_{t\_h})$ antennas arranged in $N_{t\_v}$ rows and $N_{t\_h}$ columns. If the gap between columns is narrow and $N_{t\_h}$ is not large, the same precoding scheme may be configured for all partitions. However, a linking vector is set independently of the sub-precoder.

FIG. 18 illustrates an example of applying rowwise aligned fractional precoding to a square array.

Referring to FIG. 18, each row is set as one partition in a square array having $N_t(= N_{t\_v} \times N_{t\_h})$ antennas arranged in $N_{t\_v}$ rows and $N_{t\_h}$ columns. If the gap between rows is narrow and $N_{t\_v}$ is not large, the same precoding scheme may be configured for all partitions. However, a linking vector is set independently of the sub-precoder.

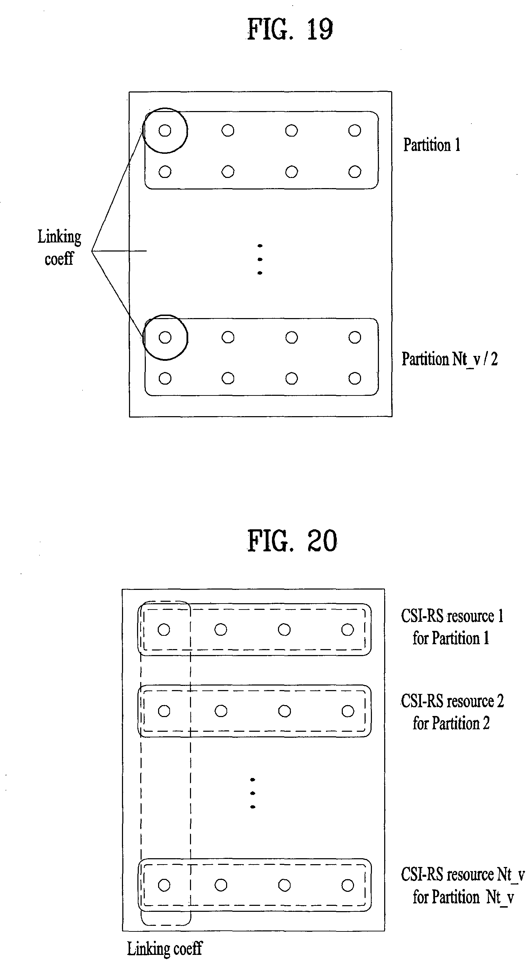

FIG. 19 illustrates an example of applying row groupwise aligned fractional precoding to a square array according to another embodiment of the present invention.

Referring to FIG. 19, each row group including $N$ rows is set as one partition in a square array having $N_t(= N_{t\_v} \times N_{t\_h})$ antennas arranged in $N_{t\_v}$ rows and $N_{t\_h}$ columns. If the gap between row groups is narrow and $N_{t\_v}$ is not large, the same precoding scheme may be set for all partitions. However, a linking vector is set independently of the sub-precoder.

As illustrated in FIGS. 16 to 19, if all partitions are of the same size and the same precoder is applied to the partitions (i.e. $\mathbf{v}_i \square \mathbf{v}_{i,1} = \cdots = \mathbf{v}_{i,M}$), a precoder for an ith layer may be represented as a Kronecker product between a linking precoder and a sub-precoder, given as Equation 21.

【Equation 21】

$$\mathbf{u}_i = [\alpha_{i,1}\mathbf{v}_{i,1}^T \ \alpha_{i,2}\mathbf{v}_{i,2}^T \cdots \alpha_{i,M}\mathbf{v}_{i,M}^T]^T = [\alpha_{i,1}\mathbf{v}_i^T \ \alpha_{i,2}\mathbf{v}_i^T \cdots \alpha_{i,M}\mathbf{v}_i^T]^T = \mathbf{a}_i \otimes \mathbf{v}_i$$

If all transmission layers are partitioned in the same manner, a MIMO precoder for the total layers may be represented as a Khatri-Rao product (a columnwise Kronecker product) between an $M \times N_s$ linking matrix **A** and an

$$\frac{N_t}{M} \times N_s$$

sub-precoding matrix $\mathbf{V} = [\mathbf{v}_1 \cdots \mathbf{v}_{N_s}]$, given as Equation 22.

[Equation 22]

$$\mathbf{U} = \begin{bmatrix} \mathbf{a}_1 \otimes \mathbf{v}_1 \cdots \mathbf{a}_{Ns} \otimes \mathbf{v}_{Ns} \end{bmatrix} = \mathbf{A} * \mathbf{V}$$

If each column is set as one partition in a Two-Dimensional (2D) antenna port array environment as illustrated in FIG. 17, vertical beamforming (or elevation beamforming) is performed using the sub-precoder $\mathbf{v}_i$ or **V** and horizontal beamforming (or azimuth beamforming) is performed using the linking precoder $\mathbf{a}_i$ or **A**. If each row is set as one partition in a 2D antenna port array environment as illustrated in FIG. 18, horizontal beamforming (or azimuth beamforming) is performed using the sub-precoder $\mathbf{v}_i$ or **V** and vertical beamforming (or elevation beamforming) v is performed using the linking precoder $\mathbf{a}_i$ or **A**.

In the case of perfectly aligned fractional precoding in a row or column direction in a 2D antenna (port) array environment as illustrated in FIG. 17 or FIG. 18, a precoder that performs 3D beamforming may be expressed as one sub-precoder and one linking precoder. Vertical beamforming is performed using one of the sub-precoder and the linking precoder and horizontal beamforming is performed using the other precoder.

If the fractional beamforming for the environment of perfectly aligned fractional precoding is used, the eNB applies closed-loop precoding to one of a sub-precoder and a linking precoder and one of default precoding, reference precoding, and random precoding to the other precoder in an environment where the same precoding is used for all partitions.

The fractional beamforming is useful to 3D beamforming in a 2D antenna array environment as illustrated in FIGS. 17 and 18. 3D beamforming, particularly UE-specific 3D beamforming advantageously optimizes transmission performance according to the horizontal and vertical positions of a UE and a scattering environment of a 3D space. However, UE-specific 3D beamforming is a closed-loop precoding scheme and thus requires accurate CSI between an eNB and a UE.

Therefore, as the number of eNB antennas and the dimension of beamforming increase, the difference between a minimum performance value and a maximum performance value gets wider depending on MIMO transmission schemes. Consequently, performance gets more sensitive to a CSI estimation error factor of an eNB, such as a channel estimation error, a feedback error, and channel aging. If the CSI estimation error of the eNB is not significant, normal transmission may be performed due to channel coding or the like. On the other hand, in the case of a serious CSI estimation error in the eNB, a packet reception error occurs and packet retransmission is required, thus degrading performance considerably.

For example, 3D beamforming for a UE that is moving fast in a horizontal direction with respect to an eNB increases a packet retransmission probability. While open-loop precoding is conventionally used for the UE, vertical beamforming is favorable for the UE because the UE experiences a static channel in a vertical direction. On the other hand, horizontal beamforming is favorable for a UE fast moving in the vertical direction or an environment where scattering is severe in the vertical direction. For a UE located in a narrow, tall building, the eNB may perform 3D beamforming with horizontal beamforming fixed to a specific direction. That is, the UE is instructed to configure feedback information only for vertical beamforming, thus reducing feedback overhead.

Therefore, if the fractional beamforming according to the second embodiment of the present invention is applied to a 3D beamforming environment, 2D beamforming (vertical beamforming or horizontal beamforming) may be performed according to a user environment. In this respect, the fractional beamforming scheme may be called partial dimensional beamforming. For example, an eNB having 2D Tx antenna ports may apply closed-loop precoding to one of a vertical precoder and a horizontal precoder and one of default precoding, reference precoding, and random precoding to the other precoder.

In the fractional precoding schemes, each sub-precoder and a linking precoder have been defined from the viewpoint of data transmission from an eNB. In regards to a sub-precoder and a linking precoder to which closed precoding is applied, a UE may transmit a Preferred Precoding Index (PPI) to an eNB. After matrix precoders are indexed, a preferred matrix precoder index may be fed back as a PPI in a PMI feedback scheme.

If some feedback information is separated on the basis of a unit including a partition and/or a value linking partitions, pilot signals transmitted from an eNB to a UE may be associated with a set of specific antenna ports. A set of such pilot signals is called a pilot pattern. A major pilot pattern involves Non-Zero-Power (NZP) CSI-RS resources (or processes) which are measurement pilots used in the LTE system. For example, the following mapping relationship may be established between partitions, CSI-RSs, and PMI feedbacks.

A. Aligned unit of Partition & Pilot pattern & PMI feedback

> 1. (Partition): in a system with 16 antenna ports, an eNB divides the 16 antenna ports into two partitions each having 8 antenna ports and performs fractional precoding on the two partitions.
> 2. (Pilot pattern): the eNB allocates 8Tx NZP CSI-RS resources to each partition for a UE, that is, configures two co-located NZP CSI-RS resources for the UE in order to support the fractional precoding.
> 3. (PMI feedback): the UE feeds back PMI1 and PMI2 for the two antenna port partitions, and linking coefficients (e.g. PMI3 for a linking precoder) that link PMI1 to PMI2.

That is, if an NZP CSI-RS resource is separately allocated to each antenna port partition, the eNB may configure a plurality of NZP CSI-RS resources to the UE, for a plurality of co-located (or synchronized) antenna port partitions belonging to the eNB (or transmission point). To distinguish a non-co-located antenna port pattern used for CoMP transmission from the co-located antenna port patterns, the eNB may additionally indicate co-location or non-co-location between NZP CSI-RS resources. For example, a Quasi-Co-Location (QCL) condition between a plurality of NZP CSI-RS resources may be indicated to the UE.

A pilot transmission unit and an antenna port partition unit are not always identical as in the above example. For example, when one 8Tx CSI-RS resource is configured, the UE may configure feedback information for two 4Tx partitions. In addition, an antenna port partition unit and a feedback unit are not always identical. Particularly in the case of aligned partitioned precoding, common PPI feedback information may be transmitted for partitions to which the same precoding is applied. Therefore, one feedback unit may be configured for a plurality of partitions.

B. Not aligned unit of Partition & Pilot pattern & PMI feedback

> 1. (Partition): it is assumed that antenna ports are partitioned as illustrated in FIG. 18.
> 2. (PMI feedback): feedback information includes a PPI commonly applied to all partitions (referred to as a common PPI) and linking coefficients, in consideration of perfectly aligned fractional precoding. In this case, the partition unit and the feedback unit may be different.
> 3. (Pilot pattern): a pilot pattern may be allocated in various manners.

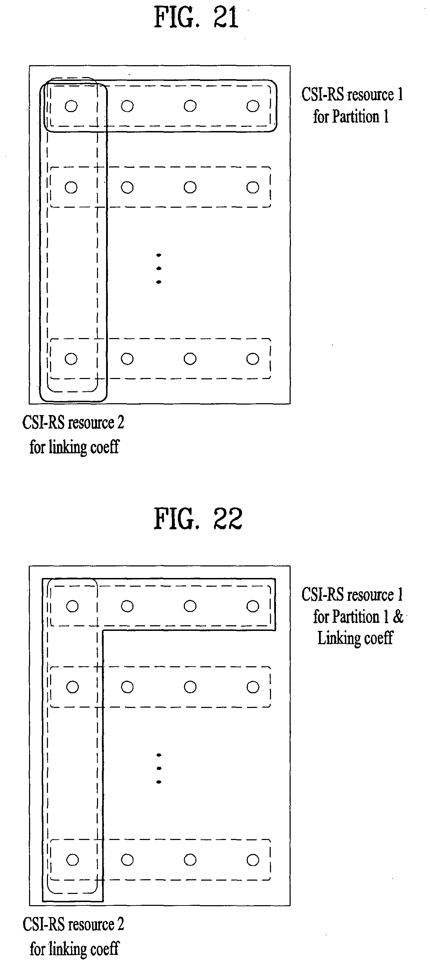

FIGS. 20, 21, and 22 illustrate exemplary pilot pattern allocation methods. Specifically, a pilot resource may be configured separately for each partition as illustrated in FIG. 20. As illustrated in FIG. 21, one pilot pattern may be transmitted in a first partition so that the UE may calculate a common PPI, and one pilot pattern may be transmitted through antenna ports to which a linking precoder is applied, so that the UE may calculate linking coefficients. Or only one pilot pattern may be configured so that the UE may calculate a common PPI and linking coefficients at one time, as illustrated in FIG. 22.

As described above, in order to support closed loop MIMO precoding, a UE should transmit a pilot or feedback information. In general, in a frequency division duplexing (FDD) system, since uplink and downlink frequency bands are different, a method for transmitting a pilot at a UE and estimating a downlink channel at an eNB using channel symmetry between uplink and downlink is not suitable. Thus, feedback information is preferably configured and transmitted.

Feedback information may be divided into explicit information and implicit information and preferred precoder index (PPI) type implicit information is mainly used in consideration of feedback overhead. In order to support closed loop partitioned precoding through implicit feedback, PPI information for a partitioned precoder and PPI information for a linking precoder may be configured as feedback information.

On the assumption of perfectly aligned precoding in which all partitioned precoders are equally configured, as shown in FIG. 20, if a separate pilot pattern is transmitted in each antenna port partition, the UE may configure feedback information as follows:

1) a PPI which will be commonly applied to pilot patterns between which a QCL assumption is possible
2) linking coefficient information for linking PPIs for pilot patterns between which a QCL assumption is possible (e.g., PPIs for linking precoders)
3) a rank indicator (RI)
4) a CQI when 1) to 3) are applied.

As described above, the pilot pattern may be interpreted as an NZP CSI-RS resource or a CSI process in an LTE system. That is, in the LTE system, one pilot pattern may mean (1) one NZP CSI-RS resource, (2) one CSI process or (3) one NZP CSI-RS resource included in one CSI process. In particular, in the case of (3), only one NZP CSI-RS resource may be included in a CSI process as in the LTE system or a plurality of NZP CSI-RS resources may be included in one CSI process. The PPI may be expressed as a PMI if a precoder is configured in the form of a matrix.

The above-described configuration of the feedback information is transmitted by the UE at the same transmission point and is selectively applicable to pilot patterns between which a QCL assumption is possible. Examples of a method for, at a UE, determining whether a QCL assumption is possible between a plurality of pilot patterns will now be described.

1. An eNB may explicitly or implicitly notify a UE of whether a QCL assumption between pilot patterns is possible. For example, an indicator indicating whether a QCL assumption is possible may be included in a plurality of NZP CSI-RS resources or a plurality of CSI processes or information about NZP CSI-RS resources, between which a QCL assumption is possible, may be separately indicated via RRC signaling. Additionally, the UE may regard a QCL assumption between a plurality of NZP-RS resources included in a single CSI process as being possible. In this case, the eNB may configure NZP CSI-RS resources, between which a QCL assumption is possible, in a single CSI process.
2. Alternatively, the UE may autonomously determine whether a QCL assumption between pilot patterns is possible.

For example, a difference in reception timing offset between the pilot patterns may be calculated to determine whether a QCL assumption is possible. More specifically, if the difference in reception timing offset is within a threshold, it may be determined that the QCL assumption between the pilot patterns is possible. Alternatively, whether the QCL assumption is possible may be determined using the properties of channels estimated using the pilot patterns. More specifically, when the properties of the estimated channels are similar, it may be determined that the QCL assumption between the pilot patterns is possible.

The UE may use the above-described information 1), that is, the PPI which will be commonly applied to pilot patterns, between which a QCL assumption is possible, in one of the following methods.

A) The common PPI, which will be commonly applied to channels estimated by the pilot patterns and candidates of linking coefficients, are all applied and a common PPI having maximum performance and a linking coefficient set are simultaneously selected. That is, the information 1) and the information 2) are simultaneously calculated.
B) Next, a method for first applying a phase difference between pilot patterns to a linking coefficient and then averaging channels estimated using the pilot patterns to calculate a PPI for an average channel may also be considered.
C) Lastly, PPIs for pilot patterns may be first calculated and a final common PPI may be further calculated. Here, various methods may be used to obtain the common PPI from the PPIs for the pilot patterns. For example, a PPI closest to an average value of the PPIs or a PPI having a channel estimate with highest reliability may be calculated as a common PPI.

When the UE calculates the information 2), the information 1) and the information 2) may be calculated as in A) or a common PPI may be first calculated and then a linking coefficient for optimizing performance of the common PPI may be calculated. Alternatively, as in B), a linking coefficient may be first calculated based on channels estimated using a first pilot of each pilot pattern and then a common PPI may be calculated. Alternatively, the common PPI and the linking coefficient may be independently calculated.

Additionally, when the information 3), that is, the RI, is calculated, the information 1) and 2) optimized according to each rank may be calculated and then an RI for optimizing performance may be selected. Of course, the information 4) means a CQI value, to which the finally selected information 1) to 3) is applied.

When pilot patterns are transmitted in a row or column direction in a two-dimensional array environment, the information 1) and the information 2) may be replaced with a PPI for horizontal beamforming and a PPI for vertical beamforming, respectively. Of course, the information 1) and the information 2) may be applied as a PPI for vertical beamforming and a PPI for horizontal beamforming, respectively.

Similarly, on the assumption of perfectly aligned precoding in which all partitioned decoders are equally configured, as shown in FIG. 21, if a separate pilot pattern is transmitted in each antenna port partition, the UE may configure feedback information as follows:

(1) a PPI to be applied to each pilot pattern
(2) a rank indicator (RI)
(3) a CQI when (1) to (2) are applied.

In this case, the UE may detect a PPI set optimized for each rank, compare transmission performances of the PPIs and calculate an optimal rank, in order to calculate the information (2).

As described above, a method for configuring all precoder sets possible in a 3D MIMO environment and detecting an optimal PPI, RI and CQI requires considerably high UE calculation complexity for feedback information configuration. If it is assumed that each of codebooks for a vertical PPI (V-PPI) and a horizontal PPI (H-PPI) has a size of N bits per rank, the UE requires a process of calculating and comparing transmit quality (e.g., CQI, SNR, SINR, etc.) for a precoder configuration corresponding to N2Rmax. Here, Rmax means a maximum transmit rank.

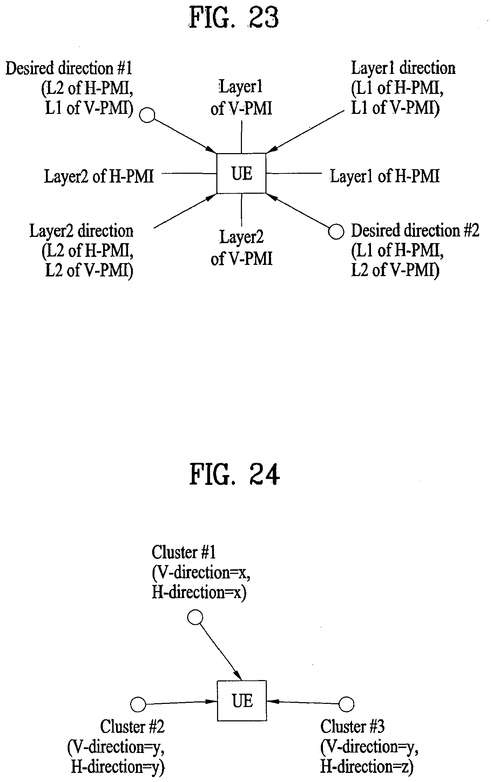

FIG. 23 is a diagram showing an example in which mismatching between layers occurs if a UE feeds back a H-PMI and a V-PMI.

Upon designing a precoder for performing 3D beamforming, a transmitter should concentrate transmit energy in an optimal direction in a 3D space to concentrate signal energy on a receiver. In a V-PMI and a H-PMI, as shown in FIG. 23, a 3D-PMI of each layer, that is, a desired direction, may be given. Here, L1 and L2 indicate layer indices.

The V-PMI and the H-PMI depend on a 3D wireless environment of the UE and the eNB. When the UE only feeds back the V-PMI and the H-PMI of the layer unit, an optimal 3D-PMI may not be expressed. Alternatively, if the UE obtains a received signal by transferring the V-PMI and the H-PMI of the layer unit to respective domains, a pair of V-PMI and H-PMI completely different from the optimal 3D PMI may be obtained from the viewpoint of the UE. As a result, L1 and L2 of the V-PMI and L1 and L2 of the H-PMI for transport layers may mismatch and the eNB may concentrate energy in the wrong direction, causing transmission errors.

In order to solve mismatch between layers which may occur when the UE feeds back H-PMI and V-PMI, which are matrix type PPIs, matching between layers or permutation information may be included in feedback information. In

$$N^2 \sum_{r=1}^{R_{\max}} r!$$

this case, the UE should configure a precoder corresponding to and compare transmit quality. Here, in 'r!', '!' means a factorial operation.

The number of cases of configuring the precoder increases and the number of antennas also increases as a massive MIMO environment develops. Accordingly, the amount of calculation used to configure the precoder to obtain channel quality considerably increases. For example, when each of the number Nv of vertical antennas and the number Nh of horizontal antennas is 8, the UE should select MIMO precoders for 64 transmit antennas with respect to each precoder configuration and calculate transmit quality thereof.

If complexity of a process of selecting a MIMO precoder based on N transmit antennas, M receive antennas and r transmit layers and calculating transmit quality thereof is C(N, M, r), in the above example, complexity of a conventional method is expressed as shown in Equations 23 and 24. In particular, Equation 23 shows complexity when layer permutation is not supported and Equation 24 shows complexity when layer permutation is supported.

[Equation 23]

$$N^2 \sum_{r=1}^{R_{\max}} C(N_v \cdot N_h, N_r, r)$$

[Equation 24]

$$N^2 \sum_{r=1}^{R_{\max}} r!C(N_v \cdot N_h, N_r, r)$$

In order to maximally suppress two factors increasing complexity, that is, increase in the number of cases of configuring the precoder and increase in the amount of calculation upon configuring the precoder, the present invention proposes a simple feedback calculation and configuration method. Hereinafter, for convenience of description, a PMI which is a matrix type PPI is assumed.

### First embodiment

In a first embodiment of the present invention, the UE calculates a PMI, an RI and a CQI according to the following steps 1 to 3.
Step 1: a PMI and an RI for each of a vertical-direction channel and a horizontal-direction channel are independently selected. That is, {V-PMI, V-RI} and {H-PMI, H-RI} are selected.
Step 2: As shown in Equation 25 below, a 3D-RI (r*) is set to the larger of the V-RI and the H-RI.

[Equation 25]

$$r^* = \max(\text{V-RI}, \text{H-RI})$$

Step 3: With respect to a domain x corresponding to the smaller of the V-RI and the H-RI, an x-RI (that is, one of V-RI and H-RI) is set to r* and, with respect to a domain y corresponding to the larger of the V-RI and the H-RI, an x-PMI is detected again on the condition that a y-PMI (that is, one of H-PMI and V-PMI) is fixed to a value obtained in step 1.
In step 1, the vertical-direction channel and the horizontal-direction channel may be reinterpreted as a channel (or an average of channels) estimated using pilot(s), between which a QCL assumption is possible, upon pilot transmission shown in FIG. 20 or a channel (corresponding to a linking coefficient) composed of a combination of specific antenna ports (or an average of channels composed of a combination of specific antenna ports) between pilots, between which a QCL assumption is possible. In step 1, the vertical-direction channel and the horizontal-direction channel may be reinterpreted as channels estimated using pilots, between which a QCL assumption is possible, upon pilot transmission shown in FIG. 21. According to the above-described pilot transmission method, a vertical domain and a horizontal domain are not distinguished by the UE. In this case, instead of the V-PMI/H-PMI, a PMI for pilot pattern #1 and a PMI for pilot pattern #2 may be expressed in the form of a PMI and an RI may be similarly applied.
In step 1, since a PMI and an RI are respectively detected with respect to the vertical-direction channel and the horizontal-direction channel, a conventional calculation method is applicable without change. Complexity caused in step 1 is expressed as shown in FIG. 26.

[Equation 26]

$$N \sum_{r=1}^{R_{\max}} C(N_v, N_r, r) + N \sum_{r=1}^{R_{\max}} C(N_h, N_r, r)$$

In step 2, the reason why the 3D-RI is composed of the larger of the V-RI and the H-RI will be described with reference to FIG. 24.
FIG. 24 shows an example of a 3D reception ray cluster environment.
Referring to FIG. 24, assume that a UE exists in an environment in which three dominant ray clusters exist. In the figure, cluster #2 and cluster #3 are located at the same vertical position (or vertical direction angle) but have different horizontal positions (or horizontal direction angles). Accordingly, an RI measured at the vertical-direction channel is likely to be 2 and an RI measured at the horizontal-direction channel is likely to be 3. At this time, an RI measured at a 3D channel will be 3.
The example of FIG. 24 may frequently occur in a real wireless communication environment. When a user is located behind a low building in a non-line of sight (NLOS) environment, a component (cluster #1) refracted and received from the top of the building and a component (cluster #2 and cluster #3) received from the left and right of the building may be present. Although the 3D-RI is the larger of the V-RI and the H-RI in FIG. 24, more clusters may be present in the same direction. Actually, a relationship of 3D-RI ≥ max (V-RI, H-RI) is satisfied (e.g., cluster #4 located at a vertical position x and a horizontal position x). However, in order to measure a 3D-RI corresponding to a maximum value, a process of configuring all 3D channels is necessary. Thus, in the proposed method, the 3D-RI value is set to be equal to max (V-RI, H-RI).

In step 3, when x-RI=r* (value set in step 2) with respect to a domain x corresponding to the smaller of the V-RI and the H-RI and a domain corresponding to the larger of the V-RI and the H-RI is y, all 3D channels are configured and the x-PMI is detected on the condition that the y-PMI is a value obtained in step 1. At this time, the amount of necessary calculation, that is, feedback information configuration complexity, is expressed as shown in Equation 27 below when the 3D-RI is r*(1≤r*≤Rmax).

[Equation 27]

$$N \cdot C(N_v \cdot N_h, N_r, r^*)$$

When various layer matching relationships are desired to be supported, feedback information configuration complexity shown in Equation 28 below is obtained. In this case, information about an optimal layer permutation relationship may be included in feedback information.

[Equation 28]

$$N \cdot r^* ! \, C(N_v \cdot N_h, N_r, r^*)$$

Accordingly, according to Equations 27 and 28 above, the present invention has feedback information configuration complexity shown in Equations 29 and 30 below. In particular, Equation 29 shows complexity when layer permutation is not supported and Equation 30 shows complexity when layer permutation is supported.

[Equation 29]

$$N \sum_{r=1}^{R_{max}} C(N_v, N_r, r) + N \sum_{r=1}^{R_{max}} C(N_h, N_r, r) + N \cdot C(N_v \cdot N_h, N_r, r^*)$$

[Equation 30]

$$N \sum_{r=1}^{R_{max}} C(N_v, N_r, r) + N \sum_{r=1}^{R_{max}} C(N_h, N_r, r) + N \cdot r^* ! \, C(N_v \cdot N_h, N_r, r^*)$$

Equations 29 and 30 show complexity significantly reduced as compared to complexity of the conventional method shown in Equations 23 and 24. However, if layer permutation is supported and r* is large, the amount of calculation in step 3 may still be large. In order to further reduce the amount of calculation in step 3, one of the following methods is preferably applied.

> (1) A layer to be included in the x-PMI (that is, a row or column of a precoding matrix) is composed of layers of the x-PMI obtained in step 1 only.
> (2) A layer to be included in the x-PMI (a row or column of a precoding matrix) includes layers of the x-PMI obtained in step 1.
> (3) A preferred PMI per rank is stored in step 1 and then a preferred PMI value corresponding to r* is applied to the x-PMI in step 3.
> (4) A layer included in the x-PMI is composed of layers of the x-PMI obtained in step 1 and layers of the x-PMI corresponding to rank corresponding to (r*- x-RI).

Method (1) is due to a tendency to duplicate a preferred precoding vector in a domain having a smaller RI value as shown in FIG. 24. If method (1) is used and layer permutation is not supported, only to which layer an additive vector or matrix corresponds is determined.

For example, if x-PMI=[a b] (a and b being N×1 column vectors and precoding vectors of respective layers) is obtained in step 1 and r*3 is obtained in step 2, precoding matrices obtainable in step 3 are expressed as shown in Equations 31 and 32 below. Equation 31 shows the case in which layer permutation is not supported and Equation 32 shows the case in which layer permutation is supported.

[Equation 31]

$$\begin{bmatrix} a & b & a \end{bmatrix}, \begin{bmatrix} a & b & b \end{bmatrix}$$

[Equation 32]

$$\begin{bmatrix} a & b & a \end{bmatrix}, \begin{bmatrix} a & a & b \end{bmatrix}, \begin{bmatrix} b & a & a \end{bmatrix}, \begin{bmatrix} a & b & b \end{bmatrix}, \begin{bmatrix} b & a & b \end{bmatrix}, \begin{bmatrix} b & b & a \end{bmatrix}$$

Referring to Equations 31 and 32 above, it can be seen that the number of cases of configuring the precoder to be compared is significantly reduced.

When method (1) is applied, instead of a new index (x-PMI) corresponding to rank increased in step 3, a method of further feeding back an index for a vector/matrix corresponding to an insufficient number of layers along with the x-PMI obtained in step 1 is applicable. In this case, a new index corresponding to rank 3 is not detected and sent, but an index corresponding to an additive layer upon transmission of rank 3, that is, a PMI index corresponding to rank 1, may be fed back along with an index corresponding to rank 2 obtained in step 1. As another example of an index for an additive vector/matrix, a method of bitmapping and configuring a row or column index to be duplicated in the x-PMI may also be considered. For example, [1 0] may be transmitted if the vector added in the above example is a and [0 1] may be transmitted if the vector added in the above example is b.

Unlike method (1), method (2) is applicable when a candidate range of a vector or matrix corresponding to an additive layer increases to increase performance while further increasing complexity or when orthogonality between layer precoders is maintained to be easily applied to a codebook corresponding to high rank. Even when method (2) is applied, as described above, a method of further feeding back an index for a vector/matrix corresponding to an insufficient number of layers is applicable.

Method (3) may be used when a transmit quality calculation process of a matrix having a size of $N_v \times N_h$ is completely omitted. That is, this method may be most easily implemented but performance may be reduced as compared to the other methods.

In method (4), layer precoding vectors of the x-PMI obtained in step 1 are included as in method (1) or method (2) and layer precoding vectors corresponding to increased rank (r*- r-RI) use the preferred PMI corresponding to the rank. Referring to FIG. 24, a layer precoding vector to be added to a vertical domain is likely to match the preferred PMI at rank 1 in the vertical domain (corresponding to a vertical direction y in FIG. 24). In method (4), complexity further decreases. If method (4) is used and layer permutation is not supported, a transmit quality calculation process of a matrix having a size of $N_v \times N_h$ may be completely omitted in step 3. If layer permutation is supported, a transmit quality calculation process of a matrix having a size of $N_v \times N_h$ is necessary. Similarly to method (1) or method (2), even in this method, a method of further feeding back an index for a vector/matrix corresponding to an insufficient number of layers along with the x-PMI obtained in step 1 is applicable.

## Second embodiment

The first embodiment of the present invention relates to a method of reducing calculation complexity while maintaining high rank in a real wireless environment. However, in the first embodiment, a calculation process of an additive layer is necessary. In the second embodiment of the present invention, in order to further decrease complexity at the cost of transmission efficiency reduction, a UE calculates a PMI, RI and CQI in the following steps 1 to 3.

Step 1: The PMI and RI for a vertical-direction channel and a horizontal-direction channel are independently selected. That is, {V-PMI, V-RI and {H-PMI, H-RI} are selected.

Step 2: As shown in Equation 33 below, a 3D-RI is set to the smaller of the V-RI and the H-RI.

[Equation 33]

$$r^* = \min(\text{V-RI}, \text{H-RI})$$

Step 3: With respect to a domain y corresponding to the larger of the V-RI and the H-RI, y-RI=r* and, with respect to a domain x corresponding to the smaller of the V-RI and the H-RI, a y-PMI is detected again on the condition that the x-PMI is fixed to a value obtained in step 1.

In step 1, the vertical-direction channel and the horizontal-direction channel may be reinterpreted as a channel (or an average of channels) estimated using pilot(s), between which a QCL assumption is possible, upon pilot transmission shown in FIG. 20 or a channel (corresponding to a linking coefficient) composed of a combination of specific antenna ports (or an average of channels composed of a combination of specific antenna ports) between pilots, between which a QCL assumption is possible. In step 1, the vertical-direction channel and the horizontal-direction channel may be reinterpreted as channels estimated using pilots, between which a QCL assumption is possible, upon pilot transmission shown in FIG. 21. According to the above-described pilot transmission method, a vertical domain and a horizontal domain are not distinguished by the UE. In this case, instead of the V-PMI/H-PMI, a PMI for pilot pattern #1 and a PMI for pilot pattern #2 may be expressed in the form of a PMI and an RI may be similarly applied.

The second embodiment is different from the first embodiment in steps 2 and 3.

More specifically, in step 2, a precoder is configured by selecting two from among three clusters. That is, data is transmitted at rank 2 using a combination of cluster #1 and cluster #2 or a combination of cluster #1 and cluster #3. In step 3, a process of changing a precoding matrix corresponding to a domain having a larger RI to a precoding matrix corresponding to a domain having a small RI is performed. At this time, feedback information configuration complexity is expressed as shown in Equations 34 and 35 below. In particular, Equation 34 shows complexity when layer permutation is not supported and Equation 35 shows complexity when layer permutation is supported.

[Equation 34]

$$N \sum_{r=1}^{R_{\max}} C(N_v, N_r, r) + N \sum_{r=1}^{R_{\max}} C(N_h, N_r, r) + N \cdot C(N_v \cdot N_h, N_r, r^*)$$

[Equation 35]

$$N \sum_{r=1}^{R_{\max}} C(N_v, N_r, r) + N \sum_{r=1}^{R_{\max}} C(N_h, N_r, r) + N \cdot r^* ! \cdot C(N_v \cdot N_h, N_r, r^*)$$

Referring to Equations 34 and 35 above, while r*max(V-RI, H-RI) is obtained in the first embodiment, min(V-RI, H-RI) is obtained in the second embodiment. Therefore, complexity decreases in step 3. Even in this case, in order to further decrease complexity in step 3, one of the following methods is applicable.

(1) A layer to be included in the x-PMI (a row or column of a precoding matrix) is composed of some layers of the x-PMI obtained in step 1.
(2) A preferred PMI per rank is stored in step 1 and then a preferred PMI value corresponding to r* is applied to the x-PMI in step 3.

In method (1), a precoding matrix is configured using only some of layer precoding vectors obtained in step 1. This is due to the result observed in FIG. 24. In this case, a PMI corresponding to reduced rank is not fed back and instead an index of a vector or matrix corresponding to a subtractive layer may be fed back.

Method (2) be used when a transmit quality calculation process of a matrix having a size of $N_v \times N_h$ is completely omitted, similarly to method (3) of the first embodiment.

**Third embodiment**

An example of a feedback configuration of a UE when the first or second embodiment is applied and an index for an additive or subtractive layer is fed back will now be described.

(a) V-PMI/V-RI (result calculated in step 1)

(b) H-PMI/H-RI (result calculated in step 1)

(c) additive or subtractive PMI

(d) 3D-RI or additive or subtractive RI

(e) CQI (calculated after performing step 3)

The above information may be defined or designed to be fed back according to different properties (e.g., periodic/aperiodic, feedback period, transmission time offset) via different uplink channels or resources. In addition, information (d) may be inferred by the eNB from information (a) and information (b) and thus may be omitted. Alternatively, information (d) may be indexed and configured in the form of a PMI/RI pair along with information (c).

In addition, the UE may first calculate information (a) and information (b) using the same method and the same amount of calculation as the conventional method to feed back information (a) and information (b) and feed back information (c) and information (d) derived by simultaneously configuring 3D channels having a large number of antennas and performing related calculation independently of information (a) and information (b). Accordingly, if the amount of calculation required in step 3 is large, information (a) and information (b) may first be calculated and fed back and then information (c) and information (d) are sequentially fed back.

In a real wireless communication system, one or both of the first embodiment and the second embodiment is applicable. That is, the UE may obtain a final CQI based on the larger of the V-RI and the H-RI according to the method proposed in the first embodiment, obtain a final CQI based on the smaller of the V-RI and the H-RI according to the method proposed in the second embodiment, and obtain a final PMI, RI or CQI set through comparison. Alternatively, the UE may perform feedback using the two methods and the eNB may select transmission rank and precoder.

The PMI/RI/CQI may be calculated in overall frequency band units or subband units selected by the eNB or the UE. The CQI may be independently calculated per codeword.

The proposed method is applicable when the CQI/PMI/RI is calculated per cell, transmission point or carrier in a communication environment in which a plurality of cells or transmission points cooperate or in a carrier aggregation environment.

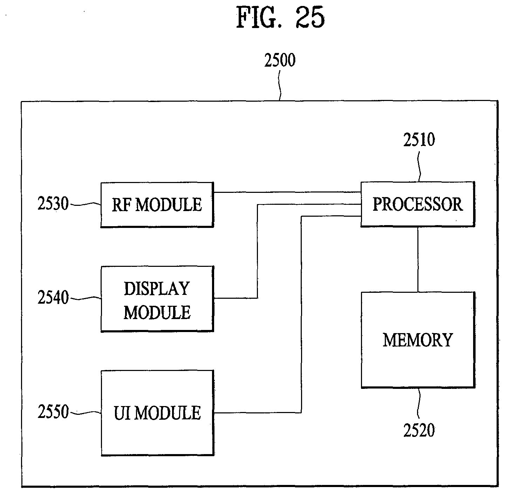

FIG. 25 is a block diagram of a communication apparatus according to an embodiment of the present invention.

Referring to FIG. 25, a communication apparatus 2500 includes a processor 2510, a memory 2520, an RF module 2530, a display module 2540, and a User Interface (UI) module 2550.

The communication device 2500 is shown as having the configuration illustrated in FIG. 25, for the convenience of description. Some modules may be added to or omitted from the communication apparatus 2500. In addition, a module of the communication apparatus 2500 may be divided into more modules. The processor 2510 is configured to perform operations according to the embodiments of the present invention described before with reference to the drawings. Specifically, for detailed operations of the processor 2510, the descriptions of FIGS. 1 to 24 may be referred to.

The memory 2520 is connected to the processor 2510 and stores an Operating System (OS), applications, program codes, data, etc. The RF module 2530, which is connected to the processor 2510, upconverts a baseband signal to an RF signal or downconverts an RF signal to a baseband signal. For this purpose, the RF module 2530 performs digital-to-analog conversion, amplification, filtering, and frequency upconversion or performs these processes reversely. The display module 2540 is connected to the processor 2510 and displays various types of information. The display module 2540 may be configured as, not limited to, a known component such as a Liquid Crystal Display (LCD), a Light Emitting Diode (LED) display, and an Organic Light Emitting Diode (OLED) display. The UI module 2550 is connected to the processor 2510 and may be configured with a combination of known user interfaces such as a keypad, a touch screen, etc.

The embodiments of the present invention described above are combinations of elements and features of the present invention. The elements or features may be considered selective unless otherwise mentioned. Each element or feature may be practiced without being combined with other elements or features. Further, an embodiment of the present invention may be constructed by combining parts of the elements and/or features. Operation orders described in embodiments of the present invention may be rearranged. Some constructions of any one embodiment may be included in another embodiment and may be replaced with corresponding constructions of another embodiment. It is obvious to those skilled in the art that claims that are not explicitly cited in each other in the appended claims may be presented in combination as an embodiment of the present invention or included as a new claim by a subsequent amendment after the application is filed.

A specific operation described as performed by a BS may be performed by an upper node of the BS. Namely, it is apparent that, in a network comprised of a plurality of network nodes including a BS, various operations performed for communication with a UE may be performed by the BS, or network nodes other than the BS. The term 'BS' may be replaced with the term 'fixed station', 'Node B', 'evolved Node B (eNode B or eNB)', 'Access Point (AP)', etc.

The embodiments of the present invention may be achieved by various means, for example, hardware, firmware, software, or a combination thereof. In a hardware configuration, the methods according to exemplary embodiments of the present invention may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, an embodiment of the present invention may be implemented in the form of a module, a procedure, a function, etc. Software code may be stored in a memory unit and executed by a processor. The memory unit is located at the interior or exterior of the processor and may transmit and receive data to and from the processor via various known means.

Those skilled in the art will appreciate that the present invention may be carried out in other specific ways than those set forth herein without departing from the essential characteristics of the present invention. The above embodiments are therefore to be construed in all aspects as illustrative and not restrictive. The scope of the invention should be determined by the appended claims, not by the above description, and all changes coming within the meaning of the appended claims are intended to be embraced therein.

[Industrial Applicability]

Although an example in which a method and apparatus for reporting channel state information for 3D beamforming in a wireless communication system and is applied to a 3GPP LTE system has been described, the present invention is applicable to various wireless communication systems in addition to the 3GPP LTE system.

**Claims**

1. A method for generating channel state information at a user equipment, UE, (2500) for multiple input multiple output, MIMO, based beamforming in a wireless communication system, the method comprising:

   receiving a first pilot pattern corresponding to a vertical-direction channel and a second pilot pattern corresponding to a horizontal-direction channel from a base station;
   selecting a precoding matrix index, PMI, and a rank indicator, RI, for each of the first pilot pattern and the second pilot pattern; and
   configuring a larger one of the RI for the first pilot pattern and the RI for the second pilot pattern as an RI for a three-dimensional, 3D, channel,
   **characterized by**:

   reconfiguring the RI for the 3D channel as an RI for a pilot pattern having the smaller RI; and
   reselecting a PMI for the pilot pattern having the smaller RI using the reconfigured RI and the PMI for the pilot pattern having the larger RI.

2. The method according to claim 1, wherein a quasi co-located, QCL, assumption is possible between the first pilot pattern and the second pilot pattern.

3. The method according to claim 2, wherein:

   the first pilot pattern and the second pilot pattern are regarded as being equal in terms of a large scale property, and
   the large scale property includes at least one of Doppler spread, Doppler shift, average delay and delay spread.

4. The method according to claim 1, further comprising:

   calculating a channel quality indicator on the assumption that the preselected PMI is applied to the RI for the 3D channel and the first pilot pattern and the reselected PMI is applied to the second pilot pattern; and
   reporting, to the base station, feedback information including the preselected PMI applied to the RI for the 3D channel and the first pilot pattern, the reselected PMI applied to the second pilot pattern, and the channel quality indicator.

5. A method for generating channel state information at a user equipment, UE, (2500) for multiple input multiple output, MIMO, based beamforming in a wireless communication system, the method comprising:

   receiving a first pilot pattern corresponding to a vertical-direction channel and a second pilot pattern corresponding to a horizontal-direction channel from a base station;

selecting a precoding matrix index, PMI, and a rank indicator, RI, for each of the first pilot pattern and the second pilot pattern;
configuring a smaller one of the RI for the first pilot pattern and the RI for the second pilot pattern as an RI for a three-dimensional, 3D, channel,
**characterized by**:

reconfiguring the RI for the 3D channel as an RI for a pilot pattern having the larger RI; and
reselecting a PMI for the pilot pattern having the larger RI using the reconfigured RI and the PMI for the pilot pattern having the smaller RI.

6. A user equipment, UE, in a wireless communication system, the UE (2500) comprising:

a wireless communication module (2530) configured to receive a first pilot pattern corresponding to a vertical-direction channel and a second pilot pattern corresponding to a horizontal-direction channel from a base station; and
a processor (2510) configured to:

select a precoding matrix index, PMI, and a rank indicator, RI, for each of the first pilot pattern and the second pilot pattern;
configure a larger one of the RI for the first pilot pattern and the RI for the second pilot pattern as an RI for a three-dimensional, 3D, channel;
**characterized in that** the processor is further configured to:

reconfigure the RI for the 3D channel as an RI for a pilot pattern having the smaller RI; and
reselect a PMI for the pilot pattern having the smaller RI using the reconfigured RI and the PMI for the pilot pattern having the larger RI.

7. The UE according to claim 6, wherein a quasi co-located, QCL, assumption is possible between the first pilot pattern and the second pilot pattern.

8. The UE according to claim 7, wherein:

the first pilot pattern and the second pilot pattern are regarded as being equal in terms of a large scale property, and
the large scale property includes at least one of Doppler spread, Doppler shift, average delay and delay spread.

9. The UE according to claim 6, wherein the processor (2510) is further configured to:

calculate a channel quality indicator on the assumption that the preselected PMI is applied to the RI for the 3D channel and the first pilot pattern and the reselected PMI is applied to the second pilot pattern; and
control the wireless communication module to transmit, to the base station, feedback information including the preselected PMI applied to the RI for the 3D channel and the first pilot pattern, the reselected PMI applied to the second pilot pattern, and the channel quality indicator.

10. A user equipment, UE, in a wireless communication system, the UE (2500) comprising:

a wireless communication module (2530) configured to receive a first pilot pattern corresponding to a vertical-direction channel and a second pilot pattern corresponding to a horizontal-direction channel from a base station; and
a processor (2510) configured to:

select a precoding matrix index, PMI, and a rank indicator, RI, for each of the first pilot pattern and the second pilot pattern;
configure a smaller one of the RI for the first pilot pattern and the RI for the second pilot pattern as an RI for a three-dimensional, 3D, channel;

**characterized in that** the processor is further configured to:

reconfigure the RI for the 3D channel as an RI for a pilot pattern having the larger RI; and
reselect a PMI for the pilot pattern having the larger RI using the reconfigured RI and the PMI for the pilot pattern having the smaller RI.

**Patentansprüche**

1.  Verfahren zum Erzeugen von Kanalzustandsinformationen an einer Benutzereinrichtung, UE, (2500) zum Mehrfacheingang-Mehrfachausgangs-, MIMO, basierten Strahlformen in einem drahtlosen Kommunikationssystem, wobei das Verfahren aufweist:

    Empfangen eines ersten Pilotmusters, das einem Kanal vertikaler Richtung entspricht, und eines zweiten Pilotmusters, das einem Kanal horizontaler Richtung entspricht, von einer Basisstation;
    Auswählen eines Präcodierungsmatrixindex, PMI, und eines Rangindikators, RI, für jeweils das erste Pilotmuster und das zweite Pilotmuster; und
    Konfigurieren eines größeren des RI für das erste Pilotmuster und des RI für das zweite Pilotmuster als einen RI für einen dreidimensionalen, 3D, Kanal,
    **gekennzeichnet durch**:

    Neukonfigurieren des RI für den 3D-Kanal als einen RI für ein Pilotmuster, das den kleineren RI aufweist; und
    Neuauswählen eines PMI für das Pilotmuster, das den kleineren RI aufweist, mittels des neukonfigurierten RI und des PMI für das Pilotmuster, das den größeren RI aufweist.

2.  Verfahren nach Anspruch 1, wobei eine quasi ko-lokalisierte, QCL, Voraussetzung zwischen dem ersten Pilotmuster und dem zweiten Pilotmuster möglich ist.

3.  Verfahren nach Anspruch 2, wobei:

    das erste Pilotmuster und das zweite Pilotmuster hinsichtlich einer Eigenschaft im großen Maßstab als gleich betrachtet werden, und
    die Eigenschaft im großen Maßstab eine Dopplerspreizung und/oder Dopplerverschiebung und/oder eine durchschnittliche Verzögerung und/oder eine Verzögerungsspreizung aufweist.

4.  Verfahren nach Anspruch 1, das ferner aufweist:

    Berechnen eines Kanalqualitätsindikators unter der Voraussetzung, dass der vorausgewählte PMI auf den RI für den 3D-Kanal und das erste Pilotmuster angewendet wird und der neuausgewählte PMI auf das zweite Pilotmuster angewendet wird; und
    Berichten an die Basisstation von Rückmeldungsinformationen, die den vorausgewählten PMI, der auf den RI für den 3D-Kanal und das erste Pilotmuster angewendet wird, den neuausgewählten PMI, der auf das zweite Pilotmuster angewendet wird, und den Kanalqualitätsindikator aufweisen.

5.  Verfahren zum Erzeugen von Kanalzustandsinformationen an einer Benutzereinrichtung, UE, (2500) zum Mehrfacheingang-Mehrfachausgangs-, MIMO, basierten Strahlformen in einem drahtlosen Kommunikationssystem, wobei das Verfahren aufweist:

    Empfangen eines ersten Pilotmusters, das einem Kanal vertikaler Richtung entspricht, und eines zweiten Pilotmusters, das einem Kanal horizontaler Richtung entspricht, von einer Basisstation;
    Auswählen eines Präcodierungsmatrixindex, PMI, und eines Rangindikators, RI, für jeweils das erste Pilotmuster und das zweite Pilotmuster;
    Konfigurieren eines kleineren des RI für das erste Pilotmuster und des RI für das zweite Pilotmuster als einen RI für einen dreidimensionalen, 3D, Kanal,
    **gekennzeichnet durch**:

    Neukonfigurieren des RI für den 3D-Kanal als einen RI für ein Pilotmuster, das den größeren RI aufweist; und
    Neuauswählen eines PMI für das Pilotmuster, das den größeren RI aufweist, mittels des neukonfigurierten RI und des PMI für das Pilotmuster, das den kleineren RI aufweist.

6. Benutzereinrichtung, UE, in einem drahtlosen Kommunikationssystem, wobei die UE (2500) aufweist:

ein drahtloses Kommunikationsmodul (2530), das konfiguriert ist, von einer Basisstation ein erstes Pilotmuster, das einem Kanal vertikaler Richtung entspricht, und ein zweites Pilotmuster zu empfangen, das einem Kanal horizontaler Richtung entspricht; und
einen Prozessor (2510), der konfiguriert ist:

einen Präcodierungsmatrixindex, PMI, und einen Rangindikator, RI, für jeweils das erste Pilotmuster und das zweite Pilotmuster auszuwählen;
einen größeren des RI für das erste Pilotmuster und des RI für das zweite Pilotmuster als einen RI für einen dreidimensionalen, 3D, Kanal zu konfigurieren;

dadurch gekennzeichnet, dass der Prozessor ferner konfiguriert ist:

den RI für den 3D-Kanal als einen RI für ein Pilotmuster neu zu konfigurieren, das den kleineren RI aufweist; und
einen PMI für das Pilotmuster, das den kleineren RI aufweist, mittels des neukonfigurierten RI und des PMI für das Pilotmuster neu auszuwählen, das den größeren RI aufweist.

7. UE nach Anspruch 6, wobei eine quasi ko-lokalisierte, QCL, Voraussetzung zwischen dem ersten Pilotmuster und dem zweiten Pilotmuster möglich ist.

8. UE nach Anspruch 7, wobei:

das erste Pilotmuster und das zweite Pilotmuster hinsichtlich einer Eigenschaft im großen Maßstab als gleich betrachtet werden, und
die Eigenschaft im großen Maßstab eine Dopplerspreizung und/oder Dopplerverschiebung und/oder eine durchschnittliche Verzögerung und/oder eine Verzögerungsspreizung aufweist.

9. UE nach Anspruch 6, wobei der Prozessor (2510) ferner konfiguriert ist:

einen Kanalqualitätsindikator unter der Voraussetzung zu berechnen, dass der vorausgewählte PMI auf den RI für den 3D-Kanal und das erste Pilotmuster angewendet wird und der neuausgewählte PMI auf das zweite Pilotmuster angewendet wird; und
das drahtlose Kommunikationsmodul zu steuern, an die Basisstation Rückmeldungsinformationen zu übertragen, die den vorausgewählten PMI, der auf den RI für den 3D-Kanal und das erste Pilotmuster angewendet wird, den neuausgewählten PMI, der auf das zweite Pilotmuster angewendet wird, und den Kanalqualitätsindikator aufweisen.

10. Benutzereinrichtung, UE, in einem drahtlosen Kommunikationssystem, wobei die UE (2500) aufweist:

ein drahtloses Kommunikationsmodul (2530), das konfiguriert ist, von einer Basisstation ein erstes Pilotmuster, das einem Kanal vertikaler Richtung entspricht, und ein zweites Pilotmuster zu empfangen, das einem Kanal horizontaler Richtung entspricht; und
einen Prozessor (2510), der konfiguriert ist:

einen Präcodierungsmatrixindex, PMI, und einen Rangindikator, RI, für jeweils das erste Pilotmuster und das zweite Pilotmuster auszuwählen;
einen kleineren des RI für das erste Pilotmuster und des RI für das zweite Pilotmuster als einen RI für einen dreidimensionalen, 3D, Kanal zu konfigurieren;

dadurch gekennzeichnet, dass der Prozessor ferner konfiguriert ist:

den RI für den 3D-Kanal als einen RI für ein Pilotmuster neu zu konfigurieren, das den größeren RI aufweist; und
einen PMI für das Pilotmuster, das den größeren RI aufweist, mittels des neukonfigurierten RI und des PMI für das Pilotmuster neu auszuwählen, das den kleineren RI aufweist.

**Revendications**

1. Procédé pour générer des informations d'état de canal dans un équipement d'utilisateur, UE (« user equipment »), (2500) pour mise en forme de faisceau à base d'entrées multiples-sorties multiples, MIMO (« multiple input multiple output »), dans un système de communication sans fil, le procédé comprenant :

   recevoir un premier motif pilote correspondant à un canal de direction verticale et d'un second motif pilote correspondant à un canal de direction horizontale en provenance d'une station de base ;
   sélectionner un indice de matrice de précodage, PMI (« precoding matrix index »), et d'un indicateur de rang, RI (« rank indicator »), pour chaque motif parmi le premier motif pilote et le second motif pilote ; et
   configurer un plus grand RI parmi le RI pour le premier motif pilote et le RI pour le second motif pilote, en tant que RI pour un canal tridimensionnel, 3D,
   **caractérisé par** :

   reconfigurer le RI pour le canal 3D, en tant que RI pour un motif pilote ayant le plus petit RI ; et
   resélectionner un PMI pour le motif pilote ayant le plus petit RI en utilisant le RI reconfiguré et le PMI pour le motif pilote ayant le plus grand RI.

2. Procédé selon la revendication 1, dans lequel une hypothèse quasi-co localisée, QCL (« quasi co-located »), est possible entre le premier motif pilote et le second motif pilote.

3. Procédé selon la revendication 2, dans lequel :

   le premier motif pilote et le second motif pilote sont considérés égaux en termes d'une propriété à grande échelle, et
   la propriété à grande échelle inclut au moins une propriété parmi une dispersion Doppler, un décalage Doppler, un retard moyen et une dispersion de retard.

4. Procédé selon la revendication 1, comprenant en outre :

   calculer un indicateur de qualité de canal dans l'hypothèse où le PMI présélectionné est appliqué au RI pour le canal 3D et au premier motif pilote et le PMI resélectionné est appliqué au second motif pilote ; et
   rapporter, à la station de base, de l'informations de rétroaction incluant le PMI présélectionné appliqué au RI pour le canal 3D et au premier motif pilote, le PMI resélectionné appliqué au second motif pilote, et l'indicateur de qualité de canal.

5. Procédé pour générer des informations d'état de canal dans un équipement utilisateur, UE (« user equipment »), (2500) pour mise en forme de faisceau à base d'entrées multiples-sorties multiples, MIMO (« multiple input multiple output »), dans un système de communication sans fil, le procédé comprenant :

   recevoir un premier motif pilote correspondant à un canal de direction verticale et un second motif pilote correspondant à un canal de direction horizontale en provenance d'une station de base ;
   sélectionner un indice de matrice de précodage, PMI (« precoding matrix index »), et d'un indicateur de rang, RI (« rank indicator »), pour chaque motif parmi le premier motif pilote et le second motif pilote ;
   configurer un plus petit RI parmi le RI pour le premier motif pilote et le RI pour le second motif pilote, en tant que RI pour un canal tridimensionnel, 3D,
   **caractérisé par** :

   reconfigurer le RI pour le canal 3D, en tant que RI pour un motif pilote ayant le plus grand RI ; et
   resélectionner un PMI pour le motif pilote ayant le plus grand RI en utilisant le RI reconfiguré et le PMI pour le motif pilote ayant le plus petit RI.

6. Équipement utilisateur, UE (« user equipment »), dans un système de communication sans fil, l'UE (2500) comprenant :

   un module de communication sans fil (2530) configuré pour recevoir un premier motif pilote correspondant à un canal de direction verticale et un second motif pilote correspondant à un canal de direction horizontale en provenance d'une station de base ; et

un processeur (2510) configuré pour :

sélectionner un indice de matrice de précodage, PMI (« precoding matrix index »), et un indicateur de rang, RI (« rank indicator »), pour chaque motif parmi le premier motif pilote et le second motif pilote ; configurer un plus grand RI parmi le RI pour le premier motif pilote et le RI pour le second motif pilote, en tant que RI pour un canal tridimensionnel, 3D ;

**caractérisé en ce que** le processeur est en outre configuré pour :

reconfigurer le RI pour le canal 3D, en tant que RI pour un motif pilote ayant le plus petit RI ; et resélectionner un PMI pour le motif pilote ayant le plus petit RI en utilisant le RI reconfiguré et le PMI pour le motif pilote ayant le plus grand RI.

7. UE selon la revendication 6, dans lequel une hypothèse quasi-colocalisée, QCL (« quasi co-located »), est possible entre le premier motif pilote et le second motif pilote.

8. UE selon la revendication 7, dans lequel :

le premier motif pilote et le second motif pilote sont considérés égaux en termes d'une propriété à grande échelle, et la propriété à grande échelle inclut au moins une propriété parmi une dispersion Doppler, un décalage Doppler, un retard moyen et une dispersion de retard.

9. UE selon la revendication 6, dans lequel le processeur (2510) est en outre configuré pour :

calculer un indicateur de qualité de canal dans l'hypothèse où le PMI présélectionné est appliqué au RI pour le canal 3D et au premier motif pilote et le PMI resélectionné est appliqué au second motif pilote ; et commander le module de communication sans fil pour émettre, vers la station de base, des informations de rétroaction incluant le PMI présélectionné appliqué au RI pour le canal 3D et au premier motif pilote, le PMI resélectionné appliqué sur au second motif pilote, et l'indicateur de qualité de canal.

10. Équipement utilisateur, UE (« user equipment »), dans un système de communication sans fil, l'UE (2500) comprenant :

un module de communication sans fil (2530) configuré pour recevoir un premier motif pilote correspondant à un canal de direction verticale et un second motif pilote correspondant à un canal de direction horizontale en provenance d'une station de base ; et un processeur (2510) configuré pour :

sélectionner un indice de matrice de précodage, PMI (« precoding matrix index »), et un indicateur de rang, RI (« rank indicator »), pour chaque motif parmi le premier motif pilote et le du second motif pilote ; configurer un plus petit RI parmi le RI pour le premier motif pilote et le RI pour le second motif pilote, en tant que RI pour un canal tridimensionnel, 3D ;

**caractérisé en ce que** le processeur est en outre configuré pour :

reconfigurer le RI pour le canal 3D, en tant que RI pour un motif pilote ayant le plus grand RI ; et resélectionner un PMI pour le motif pilote ayant le plus grand RI en utilisant le RI reconfiguré et le PMI pour le motif pilote ayant le plus petit RI.

# FIG. 1

E-UMTS

# FIG. 2

(A) CONTROL-PLANE PROTOCOL STACK

(B) USER-PLANE PROTOCOL STACK

# FIG. 3

INITIAL CELL SEARCH — P/S - SCH & [DLRS] & PBCH — S301

SYSTEM INFORMATION RECEPTION — PDCCH/ PDSCH (BCCH) — S302

RANDOM ACCESS PROCEDURE — PRACH (S303) — PDCCH/ PDSCH (S304) — PUSCH (S305) — PDCCH/ PDSCH (S306)

GENERAL DL/UL Tx/Rx S308 — PDCCH/ PDSCH — PUSCH/ PUCCH — S307

• DL/UL ACK/NACK
• UE CQI/PMI/RI REPORT USING PUSCH AND PUCCH

EP 3 143 704 B1

# FIG. 4

RADIO FRAME, $T_f = 307200 T_s = 10ms$

SLOT, $T_{slot} = 15360 T_s = 0.5ms$

| #0 | #1 | #2 | #3 | $\cdots$ | #18 | #19 |

SUBFRAME

# FIG. 5

# FIG. 6

# FIG. 7

# FIG. 8

CONTROL INFORMATION REGION

l=0       l=6 l=0       l=6

SLOT 0       SLOT 1

DOWNLINK SUBFRAME

# FIG. 9

CONTROL INFORMATION REGION

l=0       l=5 l=0       l=5

SLOT 0       SLOT 1

DOWNLINK SUBFRAME

# FIG. 10

▨ : DMRS GROUP 1

▩ : DMRS GROUP 2

# FIG. 11

$l=0$     $l=6$ $l=0$     $l=6$      $l=0$     $l=6$ $l=0$     $l=6$

even-numbered slots    even-numbered slots      even-numbered slots    even-numbered slots

# FIG. 12

(a)                             (b)                           (c)

EP 3 143 704 B1

# FIG. 13

(a) CONVENTIONAL ANTENNA SYSTEM

(b) AAS

# FIG. 14

# FIG. 15

# FIG. 16

Partition 1

Linking
Coefficient(s)

Partition 2

## FIG. 17

Linking coeff

Partition 1        Partition Nt_h

## FIG. 18

Partition 1

Partition Nt_v

Linking coeff

# FIG. 19

Linking coeff

Partition 1

Partition Nt_v / 2

# FIG. 20

CSI-RS resource 1 for Partition 1

CSI-RS resource 2 for Partition 2

CSI-RS resource Nt_v for Partition Nt_v

Linking coeff

# FIG. 21

CSI-RS resource 1
for Partition 1

CSI-RS resource 2
for linking coeff

# FIG. 22

CSI-RS resource 1
for Partition 1 &
Linking coeff

CSI-RS resource 2
for linking coeff

# FIG. 23

Desired direction #1
(L2 of H-PMI,
L1 of V-PMI)

Layer1
of V-PMI

Layer1 direction
(L1 of H-PMI,
L1 of V-PMI)

Layer2 of H-PMI ——— UE ——— Layer1 of H-PMI

Layer2 direction
(L2 of H-PMI,
L2 of V-PMI)

Layer2
of V-PMI

Desired direction #2
(L1 of H-PMI,
L2 of V-PMI)

# FIG. 24

Cluster #1
(V-direction=x,
H-direction=x)

UE

Cluster #2
(V-direction=y,
H-direction=y)

Cluster #3
(V-direction=y,
H-direction=z)

# FIG. 25

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130329664 A1

- EP 2645616 A2